# EUROPEAN PATENT SPECIFICATION

(11) **EP 4 503 363 B1**
(45) Date of publication and mention of the grant of the patent: **28.01.2026**
(21) Application number: 24188001.2
(22) Date of filing: 11.07.2024
(51) Int. Cl.: H02J 1/08, H01M 10/42, H02J 7/00

(54) **BATTERY PACK, ENERGY STORAGE SYSTEM, AND POWER SUPPLY METHOD**
BATTERIEPACK, ENERGIESPEICHERSYSTEM UND STROMVERSORGUNGSVERFAHREN
BLOC-BATTERIE, SYSTÈME DE STOCKAGE D'ÉNERGIE ET PROCÉDÉ D'ALIMENTATION ÉLECTRIQUE

(30) Priority: 31.07.2023 CN 202310961415
(43) Date of publication of application: 05.02.2025
(73) Proprietor: Huawei Digital Power Technologies Co. Ltd., Shenzhen Guangdong 518043 (CN)
(72) Inventor: LIANG, Kang, Shenzhen, 518043 (CN); PENG, Zhenyue, Shenzhen, 518043 (CN); FANG, Zhengfeng, Shenzhen, 518043 (CN)
(74) Representative: Isarpatent

(56) References cited:
- EP-A1- 3 712 007
- EP-A1- 4 199 295
- WO-A1-2022/163475
- CN-U- 212 012 176
- GB-A- 2 467 231
- US-A1- 2019 319 472
- US-B1- 6 208 117

## Description

### TECHNICAL FIELD

This application relates to the field of battery technologies, and in particular, to a battery pack, an energy storage system, and a power supply method.

### BACKGROUND

An auxiliary power supply has advantages such as a small size and multi-output, and therefore is widely used in an auxiliary power supply circuit of an energy storage system. One example is WO2022/163475. When a power system is powered off, the auxiliary power supply in the energy storage system has a self-starting function to activate the energy storage system, so that the energy storage system can be activated to supply power to a load of a user. However, the auxiliary power supply in the energy storage system is usually an external battery, and power supply of the external battery is simpler than an input. When the battery is running out of electricity or a life of the battery expires, the energy storage system cannot be normally activated. As a result, reliability of the energy storage system is reduced.

### SUMMARY

Embodiments of this application provide a battery pack, an energy storage system, and a power supply method, to improve reliability of the energy storage system. The invention is defined by the features of the independent claims. Preferred embodiments are defined in the dependent claims.

According to a first aspect, an embodiment of this application provides a battery pack. The battery pack mainly includes an auxiliary power supply circuit, a direct current converter, a cell, a first unilateral conduction component, and a second unilateral conduction component. A conduction electrode of the first unilateral conduction component is configured to receive a first direct current signal, a conduction electrode of the second unilateral conduction component is configured to receive a second direct current signal, and a cut-off electrode of the first unilateral conduction component and a cut-off electrode of the second unilateral conduction component are connected to each other and then connected to the auxiliary power supply circuit. The auxiliary power supply circuit is further connected to the direct current converter, the direct current converter is further connected to the cell, and the direct current converter is further configured to connect to a direct current bus. During specific application, a first power supply voltage of the first direct current signal inputs an activation voltage to the auxiliary power supply circuit via the first unilateral conduction component, to supply power to the auxiliary power supply circuit to activate the auxiliary power supply circuit. Alternatively, a second power supply voltage of the second direct current signal inputs an activation voltage to the auxiliary power supply circuit via the second unilateral conduction component, to supply power to the auxiliary power supply circuit to activate the auxiliary power supply circuit. With this arrangement, the first unilateral conduction component serves as an activation path for activating the auxiliary power supply circuit, and the second unilateral conduction component serves as another activation path for activating the auxiliary power supply circuit, so that a voltage source for activating the auxiliary power supply circuit is input through a plurality of activation paths. If a voltage for activating the auxiliary power supply circuit cannot be input through one of the activation paths, the voltage for activating the auxiliary power supply circuit can be input through another activation path, to ensure that the auxiliary power supply circuit can be activated to operate, and improve reliability of the energy storage system. In addition, after being activated, the auxiliary power supply circuit performs boost or buck conversion on the input voltage and supplies power to the direct current converter, so that the direct current converter operates. In this way, the direct current converter can convert a battery voltage of the cell into a discharge voltage and output the discharge voltage, and the cell can discharge.

In addition, for operating of the direct current converter, the direct current converter may further convert the input voltage into a charge voltage and then output the charge voltage to the cell, to implement a process of charging the cell.

In this application, the first unilateral conduction component is configured to: in response to that a voltage of the first direct current signal is greater than a voltage of the second direct current signal, output an activation voltage to the auxiliary power supply circuit. With this arrangement, the activation voltage can be output to the auxiliary power supply circuit via the first unilateral conduction component.

In addition, the second unilateral conduction component is configured to: in response to that the voltage of the second direct current signal is greater than the voltage of the first direct current signal, output an activation voltage to the auxiliary power supply circuit. With this arrangement, the activation voltage can be output to the auxiliary power supply circuit via the second unilateral conduction component.

In some examples, the cell is connected to the conduction electrode of the first unilateral conduction component, so that the first direct current signal is output to the first unilateral conduction component via the cell.

In this application, a second switch may be further disposed on an activation path of the first unilateral conduction component, and the second switch controls the activation path to be connected and disconnected. Based on this, the battery pack further includes the second switch. One end of the second switch is connected to the conduction electrode of the first unilateral conduction component, and the other end of the second switch is connected to the cell. That is, the second switch is connected between the cell and the conduction electrode of the first unilateral conduction component. Alternatively, one end of the second switch is connected to the cut-off electrode of the first unilateral conduction component, and the other end of the second switch and the cut-off electrode of the second unilateral conduction component are connected to each other and then connected to the auxiliary power supply circuit. That is, the second switch is connected at a connection point of the cut-off electrode of the first unilateral conduction component and the cut-off electrode of the second unilateral conduction component.

In some examples, the second switch may be controlled by using software or a combination of software and hardware. For example, the battery pack further includes a controller. The controller is communicatively connected and/or electrically connected to the second switch. The controller obtains a port voltage between a first port and a second port of the cell, and controls the second switch based on the port voltage. For example, in response to that the port voltage is not less than a first voltage threshold, the controller may control the second switch to be turned on. The second switch may be turned off by default; or in response to that the port voltage is less than the first voltage threshold, the controller directly controls the second switch to be turned off. It may be understood that the first voltage threshold is A*B, where A represents a rated voltage of the cell, and B is a percentage. For example, B is 50% to 100%. Certainly, B may alternatively be another value. This is not limited herein.

In some other examples, the second switch may be controlled by using hardware. For example, the battery pack further includes a voltage division control unit. The voltage division control unit is electrically connected to the second switch, and in response to a current input, the voltage division control unit controls the second switch to be turned on. Power may be supplied to the voltage division control unit via the cell. Based on this, the voltage division control unit is connected to the second port of the cell, and the voltage division control unit is configured to connect to the first port of the cell via a first switch. When the first switch is turned on, there is a current input in the voltage division control unit.

In a specific embodiment, a current may be input for the voltage division control unit via the cell. Based on this, the voltage division control unit is connected to the second port of the cell. The battery pack further includes a third unilateral conduction component. A conduction electrode of the third unilateral conduction component is connected to the first port of the cell, and a cut-off electrode of the third unilateral conduction component is connected to the voltage division control unit via the first switch. During actual application, when the first switch is turned on, the cell inputs a current for the voltage division control unit, so that the second switch can be controlled to be turned on via the voltage division control unit. With this arrangement, the third unilateral conduction component is used to prevent a cell in the battery pack from being directly connected to a cell in another battery pack, and prevent electricity of the cell in the another battery pack from flowing back to the cell in the battery pack.

For example, the voltage division control unit includes a voltage division resistor, a Zener diode, and a metal-oxide-semiconductor (Metal-Oxide-Semiconductor, MOS) transistor. A positive electrode of the Zener diode is connected to the first port of the cell via the first switch and a branch of the third unilateral conduction component, a negative electrode of the Zener diode is connected to a gate of the MOS transistor and a first end of the voltage division resistor, a second end of the voltage division resistor is connected to a source of the MOS transistor and the second port of the cell, and a drain of the transistor is connected to the second switch.

In an application scenario in which the cell is used as the first direct current signal, the cut-off electrode of the third unilateral conduction component is further connected to the second switch. Alternatively, the cut-off electrode of the third unilateral conduction component is connected to the conduction electrode of the first unilateral conduction component. With this arrangement, the cell supplies power to the first direct current signal via the third unilateral conduction component.

During specific implementation, the first unilateral conduction component is configured to implement unilateral conduction of a current in a direction from the conduction electrode of the first unilateral conduction component to the cut-off electrode of the first unilateral conduction component. Specifically, the current can flow into the conduction electrode of the first unilateral conduction component, and flow out of the cut-off electrode of the first unilateral conduction component. If the current flows into the cut-off electrode of the first unilateral conduction component, the current cannot flow out of the conduction electrode of the first unilateral conduction component.

In some examples, a diode may be used to form the first unilateral conduction component. Specifically, the first unilateral conduction component includes a first diode. A positive electrode of the first diode is configured to receive the first direct current signal, and a negative electrode of the first diode is connected to the cut-off electrode of the second unilateral conduction component.

In some other examples, an N-type transistor may be used to form the first unilateral conduction component. Specifically, the first unilateral conduction component includes a first N-type transistor. A gate and a drain of the first N-type transistor are connected to each other and then configured to receive the first direct current signal, and a source of the first N-type transistor is connected to the cut-off electrode of the second unilateral conduction component.

In some other examples, a P-type transistor may be used to form the first unilateral conduction component. Specifically, the first unilateral conduction component includes a first P-type transistor. A gate and a drain of the first P-type transistor are connected to each other and then connected to the cut-off electrode of the second unilateral conduction component, and a source of the first P-type transistor is configured to receive the first direct current signal.

Similarly, the second unilateral conduction component is also configured to implement unilateral conduction of a current in a direction from the conduction electrode of the second unilateral conduction component to the cut-off electrode of the second unilateral conduction component. Specifically, the current can flow into the conduction electrode of the second unilateral conduction component, and flow out of the cut-off electrode of the second unilateral conduction component. If the current flows into the cut-off electrode of the second unilateral conduction component, the current cannot flow out of the conduction electrode of the second unilateral conduction component.

In some examples, a diode may be used to form the second unilateral conduction component. Specifically, the second unilateral conduction component includes a second diode. A positive electrode of the second diode is configured to receive the second direct current signal, and a negative electrode of the second diode is connected to the cut-off electrode of the first unilateral conduction component.

In some other examples, an N-type transistor may be used to form the second unilateral conduction component. Specifically, the second unilateral conduction component includes a second N-type transistor. A gate and a drain of the second N-type transistor are connected to each other and then configured to receive the second direct current signal, and a source of the second N-type transistor is connected to the cut-off electrode of the first unilateral conduction component.

In some other examples, a P-type transistor may be used to form the second unilateral conduction component. Specifically, the second unilateral conduction component includes a second P-type transistor. A gate and a drain of the second P-type transistor are connected to the cut-off electrode of the first unilateral conduction component, and a source of the second P-type transistor is configured to receive the second direct current signal.

Similarly, the third unilateral conduction component is also configured to implement unilateral conduction of a current in a direction from the conduction electrode of the third unilateral conduction component to the cut-off electrode of the third unilateral conduction component. Specifically, the current can flow into the conduction electrode of the third unilateral conduction component, and flow out of the cut-off electrode of the third unilateral conduction component. If the current flows into the cut-off electrode of the third unilateral conduction component, the current cannot flow out of the conduction electrode of the third unilateral conduction component.

In some examples, a diode may be used to form the third unilateral conduction component. Specifically, the third unilateral conduction component includes a third diode. A positive electrode of the third diode is connected to the first port of the cell, and a negative electrode of the third diode is configured to connect to a first end of the first switch.

In some other examples, an N-type transistor may be used to form the third unilateral conduction component. Specifically, the third unilateral conduction component includes a third N-type transistor. A gate and a drain of the third N-type transistor are connected to each other and then connected to the first port of the cell, and a source of the third N-type transistor is configured to connect to the first end of the first switch.

In some other examples, a P-type transistor may be used to form the third unilateral conduction component. Specifically, the third unilateral conduction component includes a third P-type transistor. A gate and a drain of the third P-type transistor are configured to connect to the first end of the first switch, and a source of the third P-type transistor is connected to the first port of the cell.

In addition, to stabilize a voltage, a voltage regulator capacitor is further disposed in the battery pack. The cut-off electrode of the first unilateral conduction component and the cut-off electrode of the second unilateral conduction component are connected to each other and then connected to one end of the voltage regulator capacitor, and the other end of the voltage regulator capacitor is connected to a ground end, to maintain stability of an input voltage of the auxiliary power supply circuit, and improve operating stability.

A battery management unit (Battery Management Unit, BMU) is further disposed in the battery pack. The BMU is connected to the first port and the second port of the cell. The BMU collects the port voltage between the first port and the second port of the cell, and sends the collected port voltage to the controller. The controller may control the second switch based on the port voltage. Certainly, the BMU may further collect a SOC, an SOH, a temperature, and the like of the cell.

During specific implementation, the auxiliary power supply circuit and the direct current converter may be separately disposed as a direct current-direct current (Direct Current-Direct Current, DC-DC) conversion circuit.

According to a second aspect, an embodiment of this application further provides an energy storage system. The energy storage system includes a battery control unit (Battery Control Unit, BCU) and at least one battery pack. The battery pack is the battery pack in the first aspect or the possible designs of the first aspect. Details are not described herein again. In addition, the battery control unit is connected to the at least one battery pack, and the battery control unit is configured to output a discharge voltage output by a direct current converter in the battery pack. During specific application, a power system usually supplies power to a load. When the power system is powered off or the power system is switched to the energy storage system to supply power to the load, an auxiliary power supply circuit in the battery pack in the energy storage system needs to be activated, to implement a process in which the cell discharges. In embodiments of this application, a voltage source for activating the auxiliary power supply circuit is input through a plurality of activation paths, thereby improving reliability of the energy storage system.

The BCU may be communicatively connected and/or electrically connected to each battery pack, to obtain related information (for example, a state of charge (state of charge, SOC), a state of health (state of health, SOH), a temperature, and a port voltage of a cell in the battery pack) about each battery pack.

To further improve reliability of the energy storage system, a first interface is further disposed in the energy storage system. The first interface is configured to connect to an external power supply, and the external power supply inputs a first direct current signal for the battery pack through the first interface. During specific implementation, the first interface may be integrated into the BCU. Alternatively, the first interface may be integrated into each battery pack. Alternatively, a first interface is integrated into each battery pack, and a first interface is also integrated into the BCU, and the first interface of the battery pack is aggregated to the first interface in the BCU.

When the energy storage system does not operate, it is usually in a sleep state. Therefore, to wake up the energy storage system, a first switch is further disposed in the energy storage system. In addition, a third unilateral conduction component, a second switch, and a voltage division control unit are further disposed in the battery pack. One end of the second switch is connected to a conduction electrode of a first unilateral conduction component, and the other end of the second switch is connected to the cell; or one end of the second switch is connected to a cut-off electrode of a first unilateral conduction component, and the other end of the second switch and a cut-off electrode of a second unilateral conduction component are connected to each other and then connected to the auxiliary power supply circuit. In addition, the voltage division control unit is connected to a second port of the cell, a conduction electrode of the third unilateral conduction component is connected to a first port of the cell, and a cut-off electrode of the third unilateral conduction component is configured to connect to the voltage division control unit via the first switch. The voltage division control unit is connected to the second switch, and is configured to: in response to a current input, control the second switch to be turned on. With this arrangement, when a voltage of the cell is sufficient, the cell may be used to supply power to the voltage division control unit of the cell, to control the second switch to be turned on. When the voltage of the cell is insufficient, another cell may be used to supply power to the voltage division control unit of the cell, to control the second switch to be turned on.

In addition, a first switch connection line and a second switch connection line are further disposed in the energy storage system. A first end of the first switch is connected to the first switch connection line, and a second end of the first switch is connected to the second switch connection line, to connect the first switch between the first switch connection line and the second switch connection line. In addition, conduction electrodes of third unilateral conduction components in at least two battery packs are connected to the first port of the cell, and cut-off electrodes of the third unilateral conduction components in the battery packs are connected to the first switch connection line. Moreover, voltage division control units in the at least two battery packs are connected to the second switch connection line, and the voltage division control units are further connected to the second port of the cell. With this arrangement, at least two (or all) cells may be connected in parallel to the first switch connection line and the second switch connection line. Not only a cell in the battery pack is used to supply power to a voltage division control unit in the battery pack, but also a cell in another battery pack is used to supply power to the voltage division control unit in the battery pack.

To improve integration, the first switch may be integrated into the battery control unit.

In this application, the another battery pack is used as a voltage source of a second direct current signal, and an external power supply does not need to be additionally disposed for the second direct current signal. This reduces costs of activating the energy storage system, increases redundancy of the energy storage system, and improves reliability of the energy storage system. Based on this, power supply transmission lines are further disposed in the energy storage system. In addition, the battery control unit is connected to a direct current bus and the power supply transmission lines, and the battery control unit is configured to convert a discharge voltage of the direct current bus into a second power supply voltage and output the second power supply voltage to the power supply transmission lines. In addition, the power supply transmission lines are configured to input the second direct current signal for the battery pack, and a conduction electrode of the second unilateral conduction component is connected to a positive power supply transmission line in the power supply transmission lines.

To further improve reliability of the energy storage system, a second interface is further disposed in the energy storage system. The second interface is configured to connect to the external power supply, and the external power supply inputs the second direct current signal for the battery pack through the second interface. During specific implementation, the second interface may be integrated into the BCU. Alternatively, the second interface may be integrated into each battery pack. Alternatively, a second interface is integrated into each battery pack, and a second interface is also integrated into the BCU, and the second interface of the battery pack is aggregated to the second interface in the BCU.

To supply power to the load, the energy storage system further includes an inverter. The inverter is connected to the battery control unit, and the inverter is configured to connect to the load. The inverter is configured to convert the discharge voltage output by the battery control unit into a load voltage, and output the load voltage to the load, to supply power to the load.

To charge a battery, the energy storage system further includes a photovoltaic module. The inverter is further connected to the photovoltaic module. The inverter is further configured to convert a direct current voltage output by the photovoltaic module into a first charge voltage, and output the first charge voltage to the battery control unit. In addition, the battery control unit is further configured to output the first charge voltage to the battery pack, to charge the cell in the battery pack.

According to a third aspect, an embodiment of this application further provides a power supply method. The method includes: in response to that a first power supply voltage of a first direct current signal is greater than a second power supply voltage of a second direct current signal, activating an auxiliary power supply circuit via a first unilateral conduction component to supply power to a direct current converter; or in response to that the second power supply voltage is greater than the first power supply voltage, activating the auxiliary power supply circuit via a second unilateral conduction component to supply power to the direct current converter. In this way, after the power is supplied to the direct current converter, a battery voltage of a cell is converted into a discharge voltage and then the discharge voltage is output. Based on this, an inverter converts the discharge voltage into a load voltage and then outputs the load voltage to a load, to supply power to the load.

When a second switch is further disposed in a battery pack, the foregoing control method further includes: In response to that a port voltage of the cell is not less than a first voltage threshold, a controller controls the second switch to be turned on, so that the first direct current input signal reaches a conduction electrode of the first unilateral conduction component via the second switch.

When an energy storage system does not operate, it is usually in a sleep state. Therefore, to wake up the energy storage system, the following process is further included: In response to that a first switch is turned on, a current is input for a voltage division control unit, so that the voltage division unit can control the second switch to be turned on, and the first direct current signal is input to the first unilateral conduction component via the cell. With this arrangement, the auxiliary power supply circuit is activated via the first unilateral conduction component to supply power to the direct current converter. In this way, the direct current converter converts the battery voltage of the cell into a discharge voltage and outputs the discharge voltage. Based on this, a battery control unit converts the discharge voltage into the second power supply voltage and outputs the second power supply voltage to power supply transmission lines. Then, the auxiliary power supply circuit is continuously activated to supply power to the direct current converter based on relationships that the first power supply voltage is greater than the second power supply voltage and that the second power supply voltage is greater than the first power supply voltage.

The process of activating the auxiliary power supply circuit further includes the following process: The auxiliary power supply circuit supplies power to the controller; and in response to that the port voltage of the cell is not less than the first voltage threshold, the controller controls the second switch to be turned on, and the first switch is turned off after being turned on for specified duration. In this way, the controller may continue to control the second switch to be turned on, so that the first power supply voltage input by the first direct current signal reaches the conduction electrode of the first unilateral conduction component via the second switch.

According to a fourth aspect, an embodiment of this application further provides a charge method. The method includes: An inverter converts an input voltage into a first charge voltage, and outputs the first charge voltage to a battery pack; and the battery control unit converts the first charge voltage into a second power supply voltage and then outputs the second power supply voltage to power supply transmission lines, to input a second direct current signal to the battery pack, so that a second unilateral conduction component activates, based on the second power supply voltage, an auxiliary power supply circuit to supply power to a direct current converter. Based on this, the direct current converter converts the first charge voltage into a second charge voltage and then outputs the second charge voltage to a cell, to charge the cell.

Activating the auxiliary power supply circuit further includes the following process: In response to that a first power supply voltage of a first direct current signal is greater than the second power supply voltage of the second direct current signal, the auxiliary power supply circuit may be activated via the first unilateral conduction component to supply power to the direct current converter; or in response to that the second power supply voltage is greater than the first power supply voltage, the auxiliary power supply circuit may be activated via the second unilateral conduction component to supply power to the direct current converter.

### BRIEF DESCRIPTION OF DRAWINGS

FIG. 1 is a diagram of a structure of an energy storage system according to an embodiment of this application;
FIG. 2 to FIG. 6 each are a diagram of a structure of a battery pack according to an embodiment of this application;
FIG. 7a and FIG. 7b each are a diagram of a specific structure of a battery pack according to an embodiment of this application;
FIG. 8a and FIG. 8b each are a diagram of a specific structure of a battery pack according to another embodiment of this application;
FIG. 9a and FIG. 9b each are a diagram of a specific structure of a battery pack according to another embodiment of this application;
FIG. 10 to FIG. 12 each are a diagram of a specific structure of an energy storage system according to an embodiment of this application; and
FIG. 13 is a diagram of a structure of a voltage division control unit according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. It should be noted that in descriptions of this application, "a plurality of" may be understood as "at least two". In addition, it should be understood that in descriptions of this application, terms such as "first" and "second" are merely used for distinguishing and description, but should not be understood as indicating or implying relative importance, or should not be understood as indicating or implying a sequence.

It should be noted that same reference numerals in the accompanying drawings of this application represent same or similar structures, and therefore repeated descriptions thereof are omitted. Words for expressing positions and directions in this application are described by using the accompanying drawings as examples. However, changes may also be made as required, and all changes shall fall within the protection scope of this application. The accompanying drawings in this application are merely used to show a relative positional relationship, and do not represent a true scale.

The energy storage system provided in embodiments of this application may be widely used in a device that supplies power to one or more loads. The device may include but be not limited to a device such as a residential energy storage system, a photovoltaic energy storage system, an electric vehicle, a server, or a base station. It may be understood that the energy storage system in embodiments of this application is intended to include but be not limited to be used in these devices and any other proper type of device.

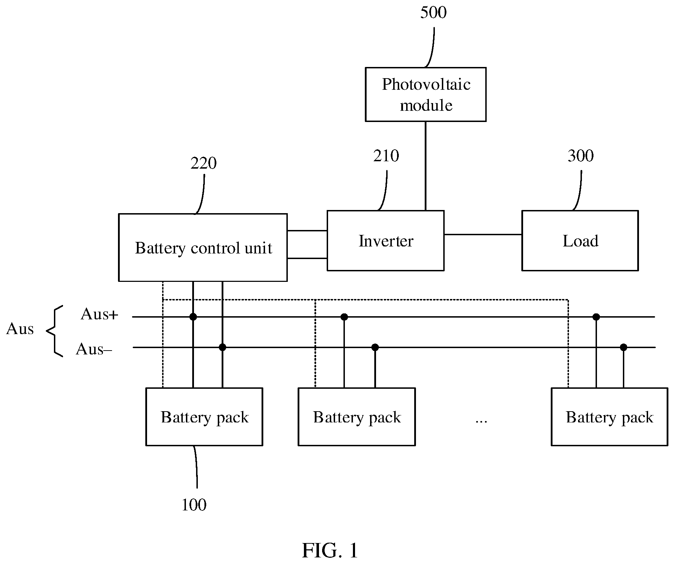

FIG. 1 is a diagram of a structure of an energy storage system according to an embodiment of this application. Refer to FIG. 1. The energy storage system mainly includes an inverter 210, direct current transmission lines Aus (including a positive direct current transmission line Aus+ and a negative direct current transmission line Aus-), a battery control unit (Battery Control Unit, BCU) 220, and a plurality of battery packs 100. The inverter 210 is connected to the positive direct current transmission line Aus+, the negative direct current transmission line Aus-, and a load 300. Each battery pack 100 is connected to the positive direct current transmission line Aus+ and the negative direct current transmission line Aus-. There may be 1, 2, 3, 4, or more battery packs 100. The BCU 220 is communicatively connected and/or electrically connected to each battery pack 100, to obtain related information (for example, a state of charge (state of charge, SOC), a state of health (state of health, SOH), a temperature, and a port voltage of a cell in the battery pack) of each battery pack 100. In addition, a power system 400 is also connected to the inverter 210 and the load 300. It may be understood that the load may be an alternating current load such as an alternating current power-consuming device (for example, a household appliance).

During specific application, the power system (for example, outputting an alternating current) usually supplies power to the load 300. When the power system is powered off or the power system is switched to the energy storage system to supply power to the load 300, an auxiliary power supply circuit in the battery pack 100 in the energy storage system needs to be activated. In embodiments of this application, the battery pack is provided, and a voltage source for activating the auxiliary power supply circuit is input through a plurality of activation paths, thereby improving reliability of the energy storage system.

The following describes the battery pack provided in this application with reference to embodiments.

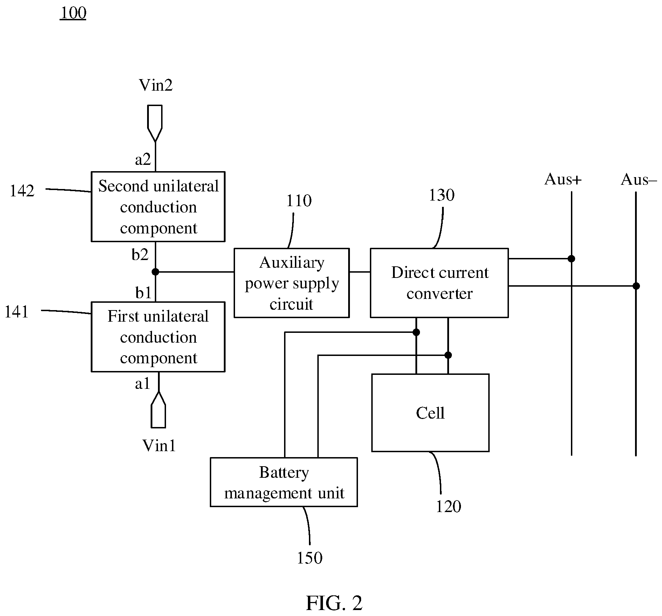

FIG. 2 is a diagram of a structure of a battery pack according to an embodiment of this application. Refer to FIG. 2. The battery pack 100 may include an auxiliary power supply circuit 110, a direct current converter 130, a cell 120, a first unilateral conduction component 141, and a second unilateral conduction component 142. A conduction electrode a1 of the first unilateral conduction component 141 is configured to receive a first direct current signal Vin1, a conduction electrode a2 of the second unilateral conduction component 142 is configured to receive a second direct current signal Vin2, and a cut-off electrode b1 of the first unilateral conduction component 141 and a cut-off electrode b2 of the second unilateral conduction component 142 are connected to each other and then connected to the auxiliary power supply circuit 110. The auxiliary power supply circuit 110 is further connected to the direct current converter 130, a positive end of a battery connection port of the direct current converter 130 is connected to a first port (for example, a total positive port) of the cell 120, a negative end of the battery connection port of the direct current converter 130 is connected to a second port (for example, a total negative port) of the cell 120, a positive end of a bus connection port of the direct current converter 130 is connected to the positive direct current transmission line Aus+, and a negative end of the bus connection port of the direct current converter 130 is connected to the negative direct current transmission line Aus-.

During specific application, a first power supply voltage of the first direct current signal Vin1 is supplied to the auxiliary power supply circuit 110 via the first unilateral conduction component 141, to activate the auxiliary power supply circuit 110. Alternatively, a second power supply voltage of the second direct current signal Vin2 is supplied to the auxiliary power supply circuit 110 via the second unilateral conduction component 142, to activate the auxiliary power supply circuit 110. With this arrangement, the first unilateral conduction component 141 serves as an activation path for activating the auxiliary power supply circuit 110, and the second unilateral conduction component 142 serves as another activation path for activating the auxiliary power supply circuit 110, so that a voltage source for activating the auxiliary power supply circuit 110 is input through a plurality of activation paths. If a voltage for activating the auxiliary power supply circuit 110 cannot be input through one of the activation paths, the voltage for activating the auxiliary power supply circuit 110 can be input through another activation path, to ensure that the auxiliary power supply circuit 110 can be activated to operate, and improve reliability of the energy storage system. In addition, after being activated, the auxiliary power supply circuit 110 performs boost or buck conversion on the input voltage and supplies power to the direct current converter 130, so that the direct current converter 130 operates. In this way, a battery voltage of the cell 120 is converted into a discharge voltage and the discharge voltage is output to the positive direct current transmission line Aus+ and the negative direct current transmission line Aus-, and the cell 120 can discharge.

The battery control unit 220 transmits discharge voltages on the positive direct current transmission line Aus+ and the negative direct current transmission line Aus- to an inverter 210, and the inverter 210 converts the discharge voltages on the positive direct current transmission line Aus+ and the negative direct current transmission line Aus- into load voltages and outputs the load voltages to the load 300, to implement a process in which power is supplied to the load 300 via the energy storage system.

In addition, the inverter 210 converts an input voltage into a first charge voltage and then outputs the first charge voltage to the battery control unit 220, and the battery control unit 220 converts the first charge voltage into a second power supply voltage, to activate the auxiliary power supply circuit 110. After being activated, the auxiliary power supply circuit 110 performs boost or buck conversion on the input voltage and then supplies power to the direct current converter 130, so that the direct current converter 130 operates. In addition, first charge voltages on the positive direct current transmission line Aus+ and the negative direct current transmission line Aus- may be converted into second charge voltages, and the second charge voltages are output to the cell 120, to implement a process of charging the cell 120.

It may be understood that, in this application, there may be one, two, three, or more first unilateral conduction components and second unilateral conduction components, respectively. In addition, specific quantities of first unilateral conduction components and second unilateral conduction components may be determined according to a requirement of actual application. This is not limited herein. In FIG. 1, one first unilateral conduction component and one second unilateral conduction component are used as an example for illustration. In addition, each cell 120 may include a plurality of electrochemical cells connected in series.

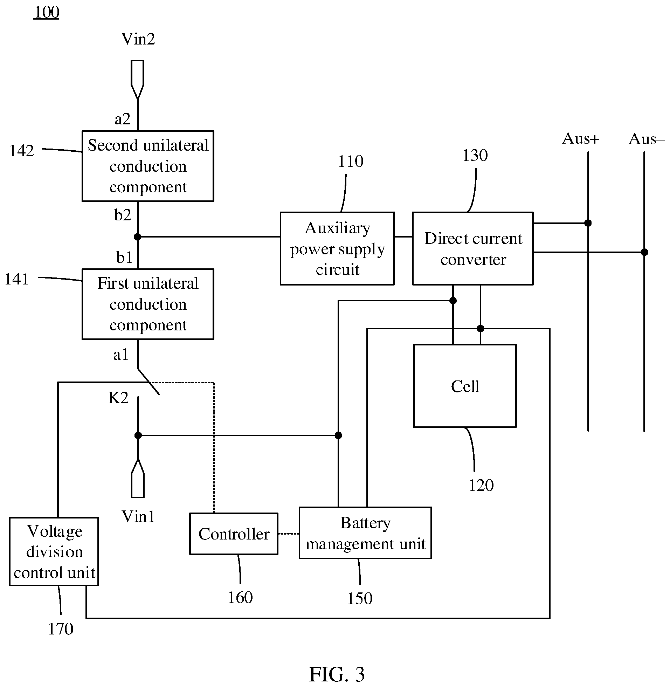

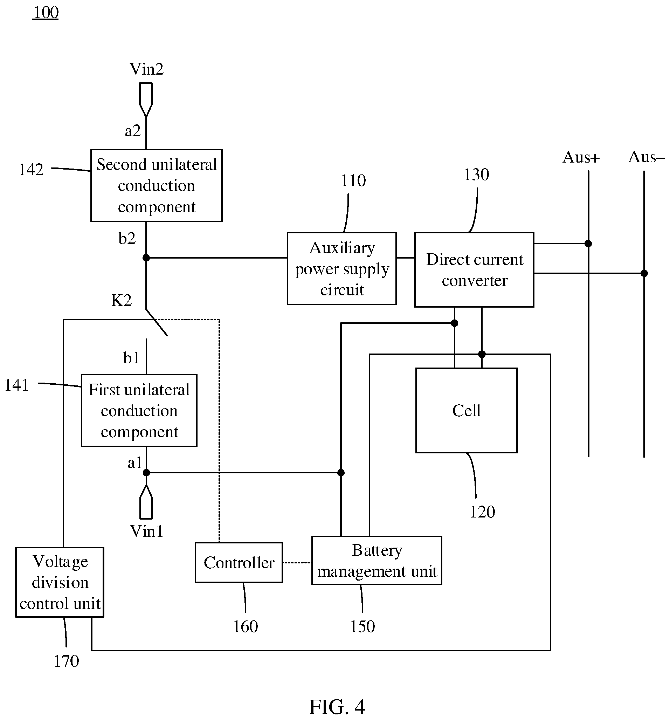

In this application, a second switch K2 may be further disposed on an activation path of the first unilateral conduction component 141, and the second switch K2 controls the activation path to be connected and disconnected. For example, FIG. 3 is a diagram of a structure of a battery pack according to another embodiment of this application. Refer to FIG. 3. The battery pack 100 may further include the second switch K2. One end of the second switch K2 is connected to the conduction electrode a1 of the first unilateral conduction component 141, and the other end of the second switch K2 is connected to the cell 120, to receive the first direct current signal Vin1. That is, the second switch K2 is connected between the cell 120 and the conduction electrode a1 of the first unilateral conduction component 141. For example, FIG. 4 is a diagram of a structure of a battery pack according to another embodiment of this application. Refer to FIG. 4. One end of the second switch K2 is connected to the cut-off electrode b1 of the first unilateral conduction component 141, and the other end of the second switch K2 and the cut-off electrode b2 of the second unilateral conduction component 142 are connected to each other and then connected to the auxiliary power supply circuit 110. That is, the second switch K2 is connected at a connection point of the cut-off electrode b1 of the first unilateral conduction component 141 and the cut-off electrode b2 of the second unilateral conduction component 142.

In some examples, the second switch may be controlled by using software or a combination of software and hardware. For example, with reference to FIG. 3 and FIG. 4, the battery pack 100 further includes a controller 160. The controller 160 is communicatively connected and/or electrically connected to the second switch K2. The controller 160 obtains a port voltage between a first port and a second port of the cell 120, and controls the second switch based on the port voltage. For example, in response to that the port voltage is not less than a first voltage threshold, the controller 160 may control the second switch K2 to be turned on. The second switch K2 may be turned off by default; or in response to that the port voltage is less than the first t voltage hreshold, the controller 160 directly controls the second switch K2 to be turned off. It may be understood that the first voltage threshold is A*B, where A represents a rated voltage of the cell 120, and B is a percentage. For example, B is 50% to 100%. Certainly, B may alternatively be another value. This is not limited herein.

In some other examples, the second switch may be controlled by using hardware. For example, with reference to FIG. 3 and FIG. 4, the battery pack 100 further includes a voltage division control unit 170. The voltage division control unit 170 is electrically connected to the second switch K2; and in response to a current input, the voltage division control unit controls the second switch K2 to be turned on. Power may be supplied to the voltage division control unit via the cell. Based on this, the voltage division control unit 170 is connected to the second port of the cell 120, and the voltage division control unit 170 is configured to connect to the first port of the cell 120 via a second switch. When the second switch is turned on, there is a current input in the voltage division control unit 170.

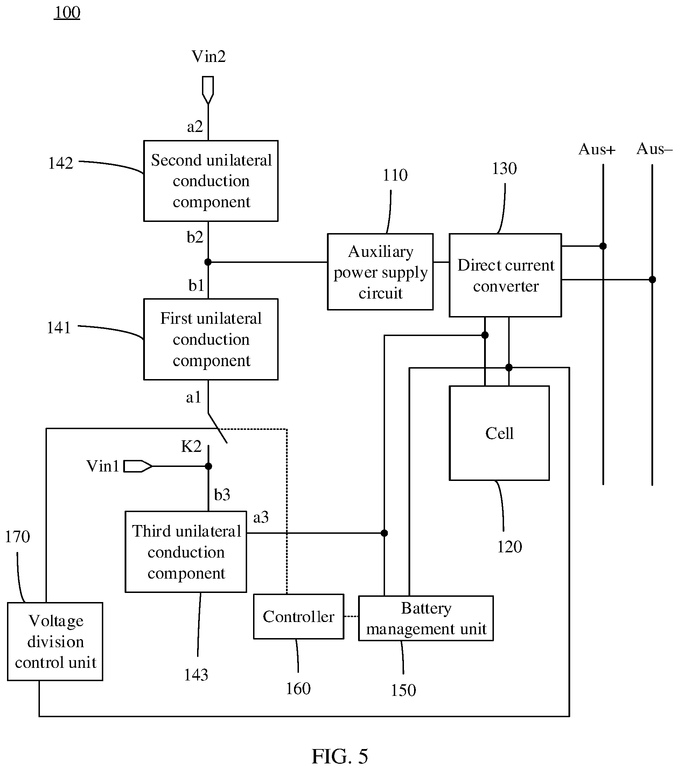

In a specific embodiment, a current may be input for the voltage division control unit 170 via the cell 120. For example, FIG. 5 is a diagram of a structure of a battery pack according to another embodiment of this application. Refer to FIG. 5. The voltage division control unit 170 is connected to the second port (for example, a total negative port) of the cell 120. The battery pack 100 further includes a third unilateral conduction component 143. A conduction electrode a3 of the third unilateral conduction component 143 is connected to the first port (for example, a total positive port) of the cell 120, and a cut-off electrode b3 of the third unilateral conduction component 143 is connected to the voltage division control unit 170 via the second switch. During actual application, when the second switch is turned on, the cell 120 inputs a current for the voltage division control unit 170, so that the second switch K2 can be controlled to be turned on via the voltage division control unit 170. With this arrangement, the third unilateral conduction component 143 is used to prevent a cell in the battery pack from being directly connected to a cell in another battery pack, and prevent electricity of the cell in the another battery pack from flowing back to the cell in the battery pack.

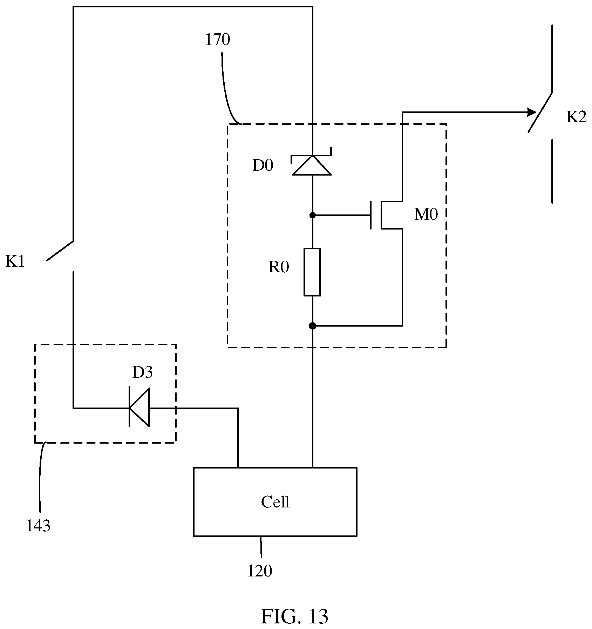

For example, with reference to FIG. 13, the voltage division control unit 170 includes a voltage division resistor R0, a Zener diode D0, and a metal-oxide-semiconductor (Metal-Oxide-Semiconductor, MOS) transistor M0. A positive electrode of the Zener diode D0 is connected to the first port of the cell 120 via the first switch K1 and a branch of the third unilateral conduction component 143, a negative electrode of the Zener diode D0 is connected to a gate of the MOS transistor M0 and a first end of the voltage division resistor R0, a second end of the voltage division resistor R0 is connected to a source of the MOS transistor M0 and the second port of the cell 120, and a drain of the transistor M0 is connected to the second switch K2. During actual application, when the first switch K1 is turned on, the cell 120 inputs a current for the voltage division control unit 170, to control the transistor M0 to be turned on, and further to control the second switch K2 to be turned on.

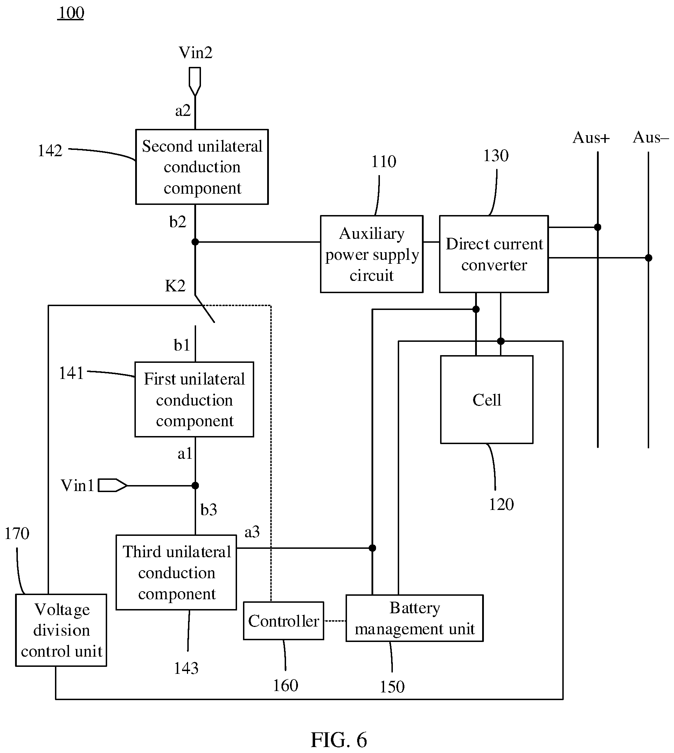

The first direct current signal Vin1 in this application may be provided by the cell 120. During specific implementation, for example, with reference to FIG. 3, the first port (for example, a total positive port) of the cell 120 outputs the first direct current signal Vin1. To be specific, the conduction electrode a1 of the first unilateral conduction component 141 is connected to the first port (for example, the total positive port) of the cell 120 via the second switch K2. For example, with reference to FIG. 4, the conduction electrode a1 of the first unilateral conduction component 141 is directly connected to the first port (for example, the total positive port) of the cell 120. For example, with reference to FIG. 5 and FIG. 6, the cut-off electrode b3 of the third unilateral conduction component 143 is further connected to the second switch K2, so that the first port (for example, the total positive port) of the cell 120 supplies power to the first direct current signal Vin1 via the third unilateral conduction component 143. Alternatively, the cut-off electrode of the third unilateral conduction component may be connected to the conduction electrode of the first unilateral conduction component. This is not limited herein.

During specific implementation, the first unilateral conduction component is configured to implement unilateral conduction of a current in a direction from the conduction electrode of the first unilateral conduction component to the cut-off electrode of the first unilateral conduction component. Specifically, the current can flow into the conduction electrode of the first unilateral conduction component, and flow out of the cut-off electrode of the first unilateral conduction component. If the current flows into the cut-off electrode of the first unilateral conduction component, the current cannot flow out of the conduction electrode of the first unilateral conduction component. The following describes in detail a specific structure of the first unilateral conduction component with reference to examples. It may be understood that the following embodiments are intended to better explain this application, but are not intended to limit this application.

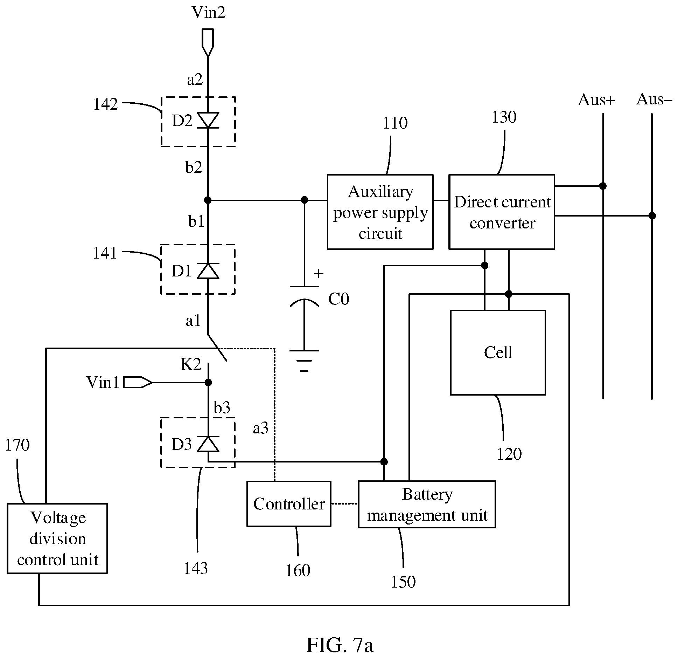

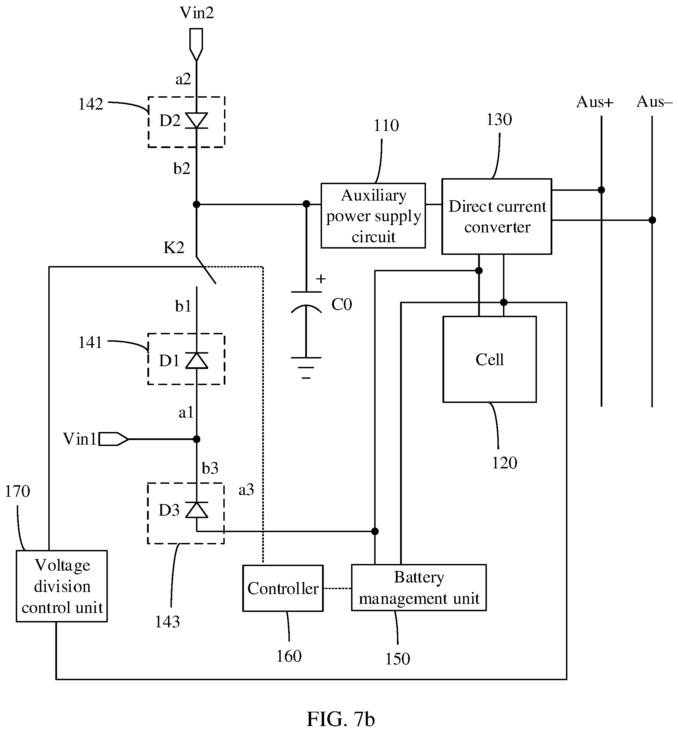

In some examples, a diode may be used to form the first unilateral conduction component. Specifically, the first unilateral conduction component includes a first diode. A positive electrode of the first diode is configured to receive the first direct current signal, and a negative electrode of the first diode is connected to the cut-off electrode of the second unilateral conduction component. For example, FIG. 7a is a diagram of a structure of a battery pack according to another embodiment of this application. Refer to FIG. 7a. A positive electrode of a first diode D1 is configured to receive the first direct current signal Vin1 via the second switch K2, and a negative electrode of the first diode D1 and the cut-off electrode b2 of the second unilateral conduction component 142 are connected to each other and then connected to the auxiliary power supply circuit 110. For example, FIG. 7b is a diagram of a structure of a battery pack according to another embodiment of this application. Refer to FIG. 7b. A positive electrode of a first diode D1 is configured to directly receive the first direct current signal Vin1, and a negative electrode of the first diode D1 and the cut-off electrode b2 of the second unilateral conduction component 142 are connected to each other via the second switch K2 and then connected to the auxiliary power supply circuit 110. With this arrangement, the positive electrode of the first diode D1 serves as the conduction electrode a1 of the first unilateral conduction component 141, and the negative electrode of the first diode D1 serves as the cut-off electrode b1 of the first unilateral conduction component 141, to implement a unilateral conduction function. In addition, in FIG. 7a and FIG. 7b, one first diode D1 is used as an example for illustration. During actual application, there may alternatively be two, three, or more first diodes D1 connected in series. In addition, the first diode D1 may be disposed as a PN junction diode, a PIN diode, or the like.

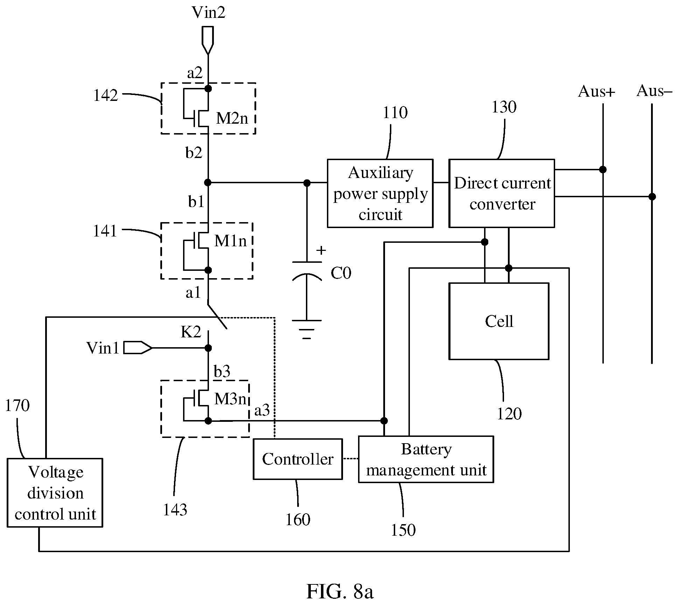

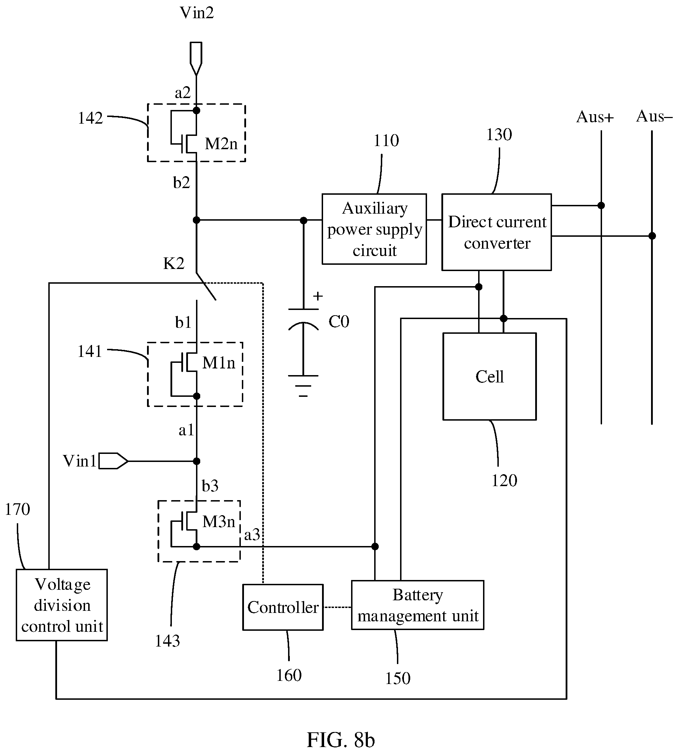

In some other examples, an N-type transistor may be used to form the first unilateral conduction component. Specifically, the first unilateral conduction component includes a first N-type transistor. A gate and a drain of the first N-type transistor are connected to each other and then configured to receive the first direct current signal, and a source of the first N-type transistor is connected to the cut-off electrode of the second unilateral conduction component. For example, FIG. 8a is a diagram of a structure of a battery pack according to another embodiment of this application. Refer to FIG. 8a. A gate and a drain of a first N-type transistor M1n are connected to each other and then configured to receive the first direct current signal Vin1 via the second switch K2, and a source of the first N-type transistor M1n and the cut-off electrode b2 of the second unilateral conduction component 142 are connected to each other and then connected to the auxiliary power supply circuit 110. For example, FIG. 8b is a diagram of a structure of a battery pack according to another embodiment of this application. Refer to FIG. 8b. A gate and a drain of a first N-type transistor M1n are connected to each other and then configured to receive the first direct current signal Vin1, and a source of the first N-type transistor M1n and the cut-off electrode b2 of the second unilateral conduction component 142 are connected to each other via the second switch K2 and then connected to the auxiliary power supply circuit 110. With this arrangement, a connection point at which the gate and the drain of the first N-type transistor M1n are connected to each other serves as the conduction electrode of the first unilateral conduction component 141, and the source of the first N-type transistor M1n serves as the cut-off electrode of the first unilateral conduction component 141, to implement a unilateral conduction function. In addition, in FIG. 8a and FIG. 8b, one first N-type transistor M1n is used as an example for illustration. During actual application, there may alternatively be two, three, or more first N-type transistors M1n connected in series. In addition, the first N-type transistor M1n may be disposed as an N-type metal-oxide-semiconductor (N Metal-Oxide-Semiconductor, NMOS) transistor.

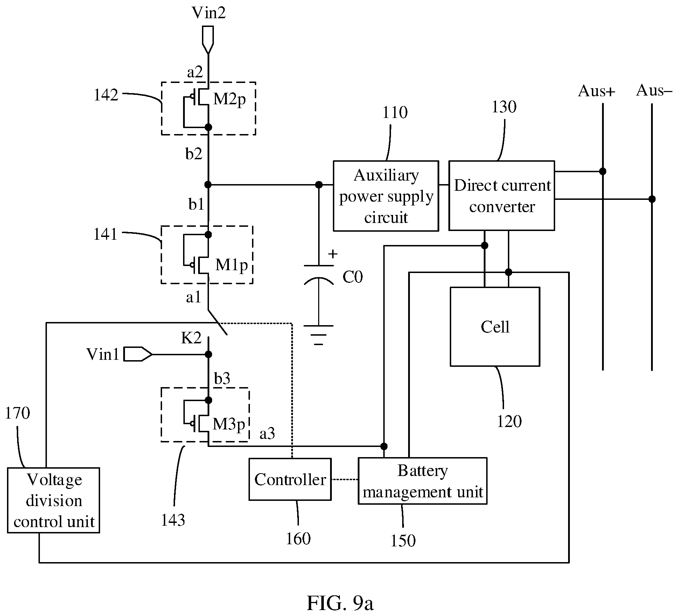

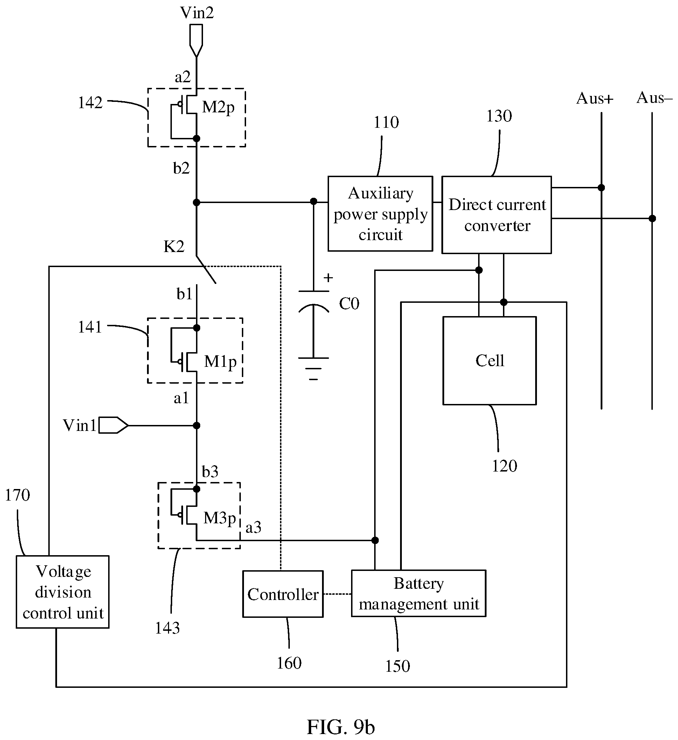

In some other examples, a P-type transistor may be used to form the first unilateral conduction component. Specifically, the first unilateral conduction component includes a first P-type transistor. A gate and a drain of the first P-type transistor are connected to each other and then connected to the cut-off electrode of the second unilateral conduction component, and a source of the first P-type transistor is configured to receive the first direct current signal. For example, FIG. 9a is a diagram of a structure of a battery pack according to another embodiment of this application. Refer to FIG. 9a. A gate and a drain of a first P-type transistor M1p are connected to each other and then connected to the auxiliary power supply circuit 110 and the cut-off electrode b2 of the second unilateral conduction component 142, and a source of the first P-type transistor M1p is configured to receive the first direct current signal Vin1 via the second switch K2. For example, FIG. 9b is a diagram of a structure of a battery pack according to another embodiment of this application. Refer to FIG. 9b. A gate and a drain of a first P-type transistor M1p are connected to each other and then connected to the auxiliary power supply circuit 110 and the cut-off electrode b2 of the second unilateral conduction component 142 via the second switch K2, and a source of the first P-type transistor M1p is configured to directly receive the first direct current signal Vin1. With this arrangement, a connection point at which the gate and the drain of the first P-type transistor M1p are connected to each other serves as the cut-off electrode of the first unilateral conduction component 141, and the source of the first P-type transistor M1p serves as the conduction electrode of the first unilateral conduction component 141, to implement a unilateral conduction function. In addition, in FIG. 9a and FIG. 9b, one first P-type transistor M1p is used as an example for illustration. During actual application, there may alternatively be two, three, or more first P-type transistors M1p connected in series. In addition, the first P-type transistor M1p may be disposed as a P-type metal-oxide-semiconductor (P Metal-Oxide-Semiconductor, PMOS) transistor.

Similarly, the second unilateral conduction component is also configured to implement unilateral conduction of a current in a direction from the conduction electrode of the second unilateral conduction component to the cut-off electrode of the second unilateral conduction component. Specifically, the current can flow into the conduction electrode of the second unilateral conduction component, and flow out of the cut-off electrode of the second unilateral conduction component. If the current flows into the cut-off electrode of the second unilateral conduction component, the current cannot flow out of the conduction electrode of the second unilateral conduction component. The following describes in detail a specific structure of the second unilateral conduction component with reference to examples. It may be understood that the following embodiments are intended to better explain this application, but are not intended to limit this application.

In some examples, a diode may be used to form the second unilateral conduction component. For example, with reference to FIG. 7a and FIG. 7b, the second unilateral conduction component 142 includes a second diode D2. A positive electrode of the second diode D2 is configured to receive the second direct current signal Vin2, and a negative electrode of the second diode D2 and the cut-off electrode b1 of the first unilateral conduction component 141 are connected to each other and then connected to the auxiliary power supply circuit 110. With this arrangement, the positive electrode of the second diode D2 serves as the conduction electrode a2 of the second unilateral conduction component 142, and the negative electrode of the second diode D2 serves as the cut-off electrode b2 of the second unilateral conduction component 142, to implement a unilateral conduction function. In addition, in FIG. 7a and FIG. 7b, one second diode D2 is used as an example for illustration. During actual application, there may alternatively be two, three, or more second diodes D2 connected in series. In addition, the second diode D2 may be disposed as a PN junction diode, a PIN diode, or the like.

In some other examples, an N-type transistor may be used to form the second unilateral conduction component. For example, with reference to FIG. 8a and FIG. 8b, the second unilateral conduction component 142 includes a second N-type transistor M2n. A gate and a drain of the second N-type transistor M2n are connected to each other and then configured to receive the second direct current signal Vin2, and a source of the second N-type transistor M2n and the cut-off electrode b1 of the first unilateral conduction component 141 are connected to each other and then connected to the auxiliary power supply circuit 110. With this arrangement, a connection point at which the gate and the drain of the second N-type transistor M2n are connected to each other serves as the conduction electrode a2 of the second unilateral conduction component 142, and the source of the second N-type transistor M2n serves as the cut-off electrode b2 of the second unilateral conduction component 142, to implement a unilateral conduction function. In addition, in FIG. 8a and FIG. 8b, one second N-type transistor M2n is used as an example for illustration. During actual application, there may alternatively be two, three, or more second N-type transistors M2n connected in series. In addition, the second N-type transistor M2n may be disposed as an NMOS transistor.

In some other examples, a P-type transistor may be used to form the second unilateral conduction component. For example, with reference to FIG. 9a and FIG. 9b, the second unilateral conduction component 142 includes a second P-type transistor M2p. A gate and a drain of the second P-type transistor M2p are connected to each other and then connected to the cut-off electrode b1 of the first unilateral conduction component 141, and a source of the second P-type transistor M2p is configured to receive the second direct current signal Vin2. With this arrangement, a connection point at which the gate and the drain of the second P-type transistor M2p are connected to each other serves as the cut-off electrode b2 of the second unilateral conduction component 142, and the source of the second P-type transistor M2p serves as the conduction electrode a2 of the second unilateral conduction component 142, to implement a unilateral conduction function. In addition, in FIG. 9a and FIG. 9b, one second P-type transistor M2p is used as an example for illustration. During actual application, there may alternatively be two, three, or more second P-type transistors M2p connected in series. In addition, the second P-type transistor M2p may be disposed as a PMOS transistor.

Similarly, the third unilateral conduction component is also configured to implement unilateral conduction of a current in a direction from the conduction electrode of the third unilateral conduction component to the cut-off electrode of the third unilateral conduction component. Specifically, the current can flow into the conduction electrode of the third unilateral conduction component, and flow out of the cut-off electrode of the third unilateral conduction component. If the current flows into the cut-off electrode of the third unilateral conduction component, the current cannot flow out of the conduction electrode of the third unilateral conduction component. The following describes in detail a specific structure of the third unilateral conduction component with reference to examples. It may be understood that the following embodiments are intended to better explain this application, but are not intended to limit this application.

In some examples, a diode may be used to form the third unilateral conduction component. For example, with reference to FIG. 7a and FIG. 7b, the third unilateral conduction component 143 includes a third diode D3. A positive electrode of the third diode D3 is connected to the first port of the cell 120, and a negative electrode of the third diode D3 and a first end of the first switch are configured to receive the first direct current signal Vin1. With this arrangement, the positive electrode of the third diode D3 serves as the conduction electrode a3 of the third unilateral conduction component 143, and the negative electrode of the third diode D3 serves as the cut-off electrode b3 of the third unilateral conduction component 143, to implement a unilateral conduction function. In addition, in FIG. 7a and FIG. 7b, one third diode D3 is used as an example for illustration. During actual application, there may alternatively be two, three, or more third diodes D3 connected in series. In addition, the third diode D3 may be disposed as a PN junction diode, a PIN diode, or the like.

In some other examples, an N-type transistor may be used to form the third unilateral conduction component. For example, with reference to FIG. 8a and FIG. 8b, the third unilateral conduction component 143 includes a third N-type transistor M3n. A gate and a drain of the third N-type transistor M3n are connected to each other and then connected to the first port (for example, a total positive port) of the cell 120, and a source of the third N-type transistor M3n is connected to the first end of the first switch and the second switch K2. With this arrangement, a connection point at which the gate and the drain of the third N-type transistor M3n are connected to each other serves as the conduction electrode a3 of the third unilateral conduction component 143, and the source of the third N-type transistor M3n serves as the cut-off electrode b3 of the third unilateral conduction component 143, to implement a unilateral conduction function. In addition, in FIG. 8a and FIG. 8b, one third N-type transistor M3n is used as an example for illustration. During actual application, there may alternatively be two, three, or more third N-type transistors M3n connected in series. In addition, the third N-type transistor M3n may be disposed as an NMOS transistor.

In some other examples, a P-type transistor may be used to form the third unilateral conduction component. For example, with reference to FIG. 9a and FIG. 9b, the third unilateral conduction component 143 includes a third P-type transistor M3p. A gate and a drain of the third P-type transistor M3p are configured to connect to the first end of the first switch and the second switch K2, and a source of the third P-type transistor M3p is connected to the first port (for example, a total positive port) of the cell 120. With this arrangement, a connection point at which the gate and the drain of the third P-type transistor M3p are connected to each other serves as the cut-off electrode b3 of the third unilateral conduction component 143, and the source of the third P-type transistor M3p serves as the conduction electrode a3 of the third unilateral conduction component 143, to implement a unilateral conduction function. In addition, in FIG. 9a and FIG. 9b, one third P-type transistor M3p is used as an example for illustration. During actual application, there may alternatively be two, three, or more third P-type transistors M3p connected in series. In addition, the third P-type transistor M3p may be disposed as a PMOS transistor.

In addition, to stabilize a voltage, with reference to FIG. 7a to FIG. 9b, a voltage regulator capacitor C0 may be further disposed in the battery pack. The cut-off electrode b1 of the first unilateral conduction component 141 and the cut-off electrode b2 of the second unilateral conduction component 142 are connected to each other and then connected to one end of the voltage regulator capacitor C0, and the other end of the voltage regulator capacitor C0 is connected to a ground end, to maintain stability of an input voltage of the auxiliary power supply circuit 110, and improve operating stability.

Still refer to FIG. 2 to FIG. 9b. A battery management unit (Battery Management Unit, BMU) 150 may be further disposed in the battery pack 100. The BMU 150 is connected to the first port and the second port of the cell 120. The BMU 150 collects the port voltage between the first port and the second port of the cell 120, and sends the collected port voltage to the controller 160. The controller 160 may control the second switch K2 based on the port voltage. Certainly, the BMU 150 may further collect a SOC, an SOH, a temperature, and the like of the cell 120.

During specific implementation, the auxiliary power supply circuit 110 and the direct current converter 130 may be separately disposed as a direct current-direct current (Direct Current-Direct Current, DC-DC) conversion circuit. Based on this, after being activated by supplying power via the first unilateral conduction component 141, the auxiliary power supply circuit 110 converts a voltage input by the first unilateral conduction component 141 into a drive voltage and then outputs the drive voltage to the direct current converter, so that the direct current converter converts a voltage of the cell into a discharge voltage and outputs the discharge voltage to the positive direct current transmission line Aus+ and the negative direct current transmission line Aus-. Alternatively, after being activated by supplying power via the second unilateral conduction component 142, the auxiliary power supply circuit 110 converts a voltage input by the second unilateral conduction component 142 into a drive voltage and then outputs the drive voltage to the direct current converter, so that the direct current converter converts a voltage of the cell into a discharge voltage and outputs the discharge voltage to the positive direct current transmission line Aus+ and the negative direct current transmission line Aus-.

The following describes in detail an input manner of the first direct current signal and the second direct current signal with reference to examples. It may be understood that the following embodiments are intended to better explain this application, but are not intended to limit this application.

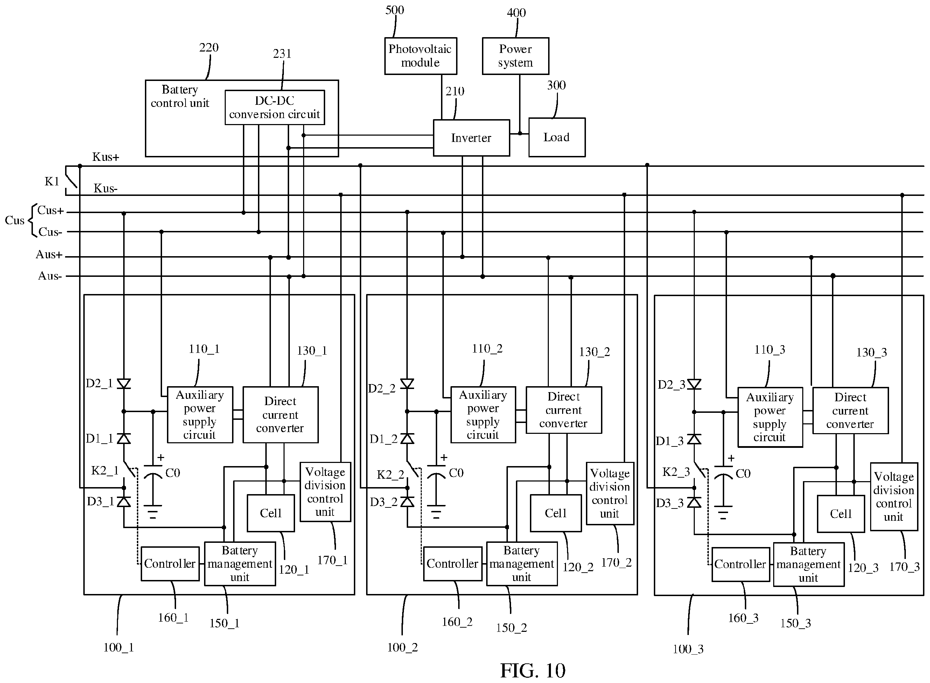

FIG. 10 is a diagram of a structure of an energy storage system according to another embodiment of this application. Three battery packs 100_1, 100_2, and 100_3 are used as an example, and the battery packs 100_1 to 100_3 separately use the structure shown in FIG. 7a as an example. Refer to FIG. 10. In the battery pack 100_1, a positive electrode of a first diode D1_1 in the first unilateral conduction component 141 is connected to a first electrode (for example, a total positive electrode) of a cell 120_1 via a second switch K2_1, to output a first power supply voltage to the first diode D1_1 via the cell 120_1. Similarly, in the battery pack 100_2, a positive electrode of a first diode D1_2 in the first unilateral conduction component 141 is connected to a first electrode (for example, a total positive electrode) of a cell 120_2 via a second switch K2_2, to output a first power supply voltage to the first diode D1_2 via the cell 120_2. In addition, in the battery pack 100_3, a positive electrode of a first diode D1_3 in the first unilateral conduction component 141 is connected to a first electrode (for example, a total positive electrode) of a cell 120_3 via a second switch K2_3, to output a first power supply voltage to the first diode D1_3 via the cell 120_3. With this arrangement, the cell in the battery pack can serve as a voltage source of the first direct current signal, and an external power supply does not need to be additionally disposed for the first direct current signal. This reduces costs of activating the energy storage system, increases redundancy of the energy storage system, and improves reliability of the energy storage system.

When the energy storage system does not operate, it is usually in a sleep state. Therefore, to wake up the energy storage system, with reference to FIG. 10, the energy storage system further includes a first switch K1, a first switch connection line Kus+, and a second switch connection line Kus-. A first end of the first switch K1 is connected to the first switch connection line Kus+, and a second end of the first switch K1 is connected to the second switch connection line Kus-, to connect the first switch K1 between the first switch connection line Kus+ and the second switch connection line Kus-. In addition, conduction electrodes (namely, positive electrodes of third diodes D3_1 to D3_3) of third unilateral conduction components in each battery pack 100_1 to 100_3 are connected to first ports (for example, total positive ports) of the cells 120_1 to 120_3, and cut-off electrodes (namely, negative electrodes of the third diodes D3_1 to D3_3) of the third unilateral conduction components in each battery pack 100_1 to 100_3 are connected to the first switch connection line Kus+, voltage division control units 170_1 to 170_3 in each battery pack are connected to the second switch connection line Kus-, and the voltage division control units 170_1 to 170_3 in each battery pack 100_1 to 100_3 are further connected to second ports (for example, total negative ports) of the cells 120_1 to 120_3. During actual application, when the first switch K1 is turned on, currents are input to the voltage division control units, so that the second switches K2_1 to K2_3 can be separately controlled to be turned on. In addition, the cell 120_1 is used as an example. When a voltage of the cell 120_1 is sufficient, the cell 120_1 may be used to supply power to the voltage division control unit 170_1 of the cell 120_1, to control the second switch K2_1 to be turned on. When the voltage of the cell 120_1 is insufficient, the other cells 120_2 and 120_3 may be used to supply power to the voltage division control unit 170_1 of the cell 120_1, to control the second switch K2_1 to be turned on.

To improve integration, the first switch K1 may be integrated into the BCU 220. During actual application, the first switch K1 may be manually controlled to be turned on and turned off. For example, when the power system 400 is powered off, an operator may manually press a physical button or a virtual button to control the first switch K1 to be turned on, and the operator controls the first switch K1 to be turned off after the first switch K1 is controlled to be turned on for specified duration (for example, 3 seconds). Alternatively, the operator may manually press the physical button or the virtual button again to control the first switch K1 to be turned off. Certainly, the first switch K1 may alternatively be controlled to be turned on and turned off in a software control manner. For example, when detecting that the power system 400 is powered off, the BCU 220 controls the first switch K1 to be turned on, and controls the first switch K1 to be turned off after the first switch K1 is controlled to be turned on for specified duration (for example, 3 seconds). In addition, when detecting that the power system 400 is powered on, the BCU 220 may also control the first switch K1 to be turned off.

In this application, direct current transmission lines are used as a voltage source of the second direct current signal Vin2, and an external power supply does not need to be additionally disposed for the second direct current signal Vin2. This reduces costs of activating the energy storage system, increases redundancy of the energy storage system, and improves reliability of the energy storage system. For example, still with reference to FIG. 10, the energy storage system further includes power supply transmission lines Cus (including a positive power supply transmission line Cus+ and a negative power supply transmission line Cus-). The negative power supply transmission line Cus- is connected to a ground end and negative ends of auxiliary power supply circuits 110_1 to 110_3, a positive end of the auxiliary power supply circuit 110_1 is connected to a negative electrode of the first diode D1_1 and a negative electrode of the second diode D2_1, a positive end of the auxiliary power supply circuit 110_2 is connected to a negative electrode of the first diode D1_2 and a negative electrode of the second diode D2_2, and a positive end of the auxiliary power supply circuit 110_3 is connected to a negative electrode of the first diode D1_3 and a negative electrode of the second diode D2_3. In addition, the BCU 220 is connected to the positive power supply transmission line Cus+ and the negative power supply transmission line Cus-. The BCU 220 may convert discharge voltages of the positive direct current transmission line Aus+ and the negative direct current transmission line Aus- into second power supply voltages and then output the second power supply voltages to the positive power supply transmission line Cus+ and the negative power supply transmission line Cus-, so that the positive power supply transmission line Cus+ and the negative power supply transmission line Cus- transmit the second power supply voltages to the second diodes D2_1 to D2_3. For example, the BCU 220 includes a main circuit and a DC-DC conversion circuit 231. The DC-DC conversion circuit 231 is connected to the positive direct current transmission line Aus+, the negative direct current transmission line Aus-, the main circuit, the positive power supply transmission line Cus+, and the negative power supply transmission line Cus-, and the DC-DC conversion circuit 231 may convert a discharge voltage into a second power supply voltage, and not only supply power to second direct current signals Vin2_1 to Vin2_3 but also supply power to the main circuit based on the second power supply voltage.

The following uses the structure of the energy storage system shown in FIG. 10 as an example to describe an operating process of the energy storage system in this application with reference to specific implementations.

When the power system 400 supplies power to the load 300, the energy storage system is usually in a sleep state. After the power system 400 is powered off, the energy storage system needs to be activated, to supply power to the load 300 via the energy storage system. The following describes a process of activating the energy storage system to supply power to the load 300.

When the energy storage system needs to be activated, the first switch K1 is controlled to be turned on for specific duration (for example, 3 seconds), and currents are input to the voltage division control units 170_1 to 170_3 in each battery pack 100_1 to 100_3, so that the second switches K2_1 to K2_3 are controlled to be turned on.

If voltages of the cell 120_1 to the cell 120_3 are all sufficient, an operating process of the battery packs 100_1 to 100_3 is as follows: The following uses the battery pack 100_1 as an example. The cell 120_1 provides a first power supply voltage for the first diode D1_1 via the third diode D3_1, so that the first diode D1_1 supplies power to the auxiliary power supply circuit 110_1. In this way, the auxiliary power supply circuit 110_1 is activated, so that the auxiliary power supply circuit 110_1 supplies power to a direct current converter 130_1, a BMU 150_1, and a controller 160_1. After these components are powered on, the BMU 150_1 sends a collected port voltage VD_1 of the cell 120_1 to the controller 160_1. If the port voltage VD_1 is not less than the first voltage threshold, the controller 160_1 also controls the second switch K2_1 to be turned on. Then, if the first switch K1 is turned off, the controller 160_1 may continue to control the second switch K2_1 to be turned on. In this way, the auxiliary power supply circuit 110_1 continues to supply power to the direct current converter 130_1, the BMU 150_1, and the controller 160_1. The direct current converter 130_1 operates after being supplied power, converts a battery voltage of the cell 120_1 into a discharge voltage, and outputs the discharge voltage to the positive direct current transmission line Aus+ and the negative direct current transmission line Aus-, so that the cell 120_1 can discharge. In addition, the BCU 220 further converts the discharge voltage into the second power supply voltage and outputs the second power supply voltage to the second diode D2_1. Based on this, the first power supply voltage is input to the positive electrode of the first diode D1_1, and the second power supply voltage is input to a positive electrode of the second diode D2_1. The negative electrode of the first diode D1_1 and the negative electrode of the second diode D2_1 are connected together to form a counter-parallel arrangement. Therefore, when the first power supply voltage is greater than the second power supply voltage, power may be supplied to the auxiliary power supply circuit 110_1 through a path of the first diode D1_1. When the second power supply voltage is greater than the first power supply voltage, power may be supplied to the auxiliary power supply circuit 110_1 through a path of the second diode D2_1, so that the auxiliary power supply circuit 110_1 continues to supply power to the direct current converter 130_1, the BMU 150_1, and the controller 160_1, thereby implementing a process in which the cell 120_1 continues to discharge. Based on this, the inverter 210 converts the discharge voltage into a load voltage and then outputs the load voltage to the load 300, to supply power to the load 300. Similarly, for an operating process of the battery packs 100_2 and 100_3, refer to the operating process of the battery pack 100_1. Details are not described herein again.

If the voltage of the cell 110_1 is insufficient, and the voltages of the cell 120_2 and the cell 120_3 are sufficient, an operating process of the battery packs 100_1 to 100_3 is as follows: For an operating process of the battery pack 100_2 and the battery pack 100_3, refer to an operating process of the foregoing battery pack 100_1. Details are not described herein again. The following describes the battery pack 100_1. Because the voltage of the cell 120_1 is insufficient, the first power supply voltage cannot be provided for the first diode D1_1 via the third diode D3_1. As a result, the auxiliary power supply circuit 110_1 cannot be activated. However, after converting the discharge voltage into the second power supply voltage, the BCU 220 also outputs the second power supply voltage to the second diode D2_1, so that power can be supplied to the auxiliary power supply circuit 110_1 via the second diode D2_1. In this way, the auxiliary power supply circuit 110_1 is activated, so that the auxiliary power supply circuit 110_1 supplies power to the direct current converter 130_1, the BMU 150_1, and the controller 160_1. The direct current converter 130_1 operates after being supplied power, converts a battery voltage of the cell 120_1 into a discharge voltage, and outputs the discharge voltage to the positive direct current transmission line Aus+ and the negative direct current transmission line Aus-, so that the cell 120_1 can discharge. Based on this, the inverter 210 converts the discharge voltage into a load voltage and then outputs the load voltage to the load 300, to supply power to the load 300.

It may be understood that the battery voltage of the cell 120_1 is insufficient for discharging, and the direct current converter 130_1 is temporarily in a standby state, and performs a charge operation process after receiving a charge instruction.

Refer to FIG. 1, and FIG. 10 to FIG. 12. A photovoltaic module 500 is further disposed in the energy storage system, and the photovoltaic module 500 can output a direct current, to charge a cell in the energy storage system. The following describes a process of charging a cell in the energy storage system.

The inverter 210 obtains power from the photovoltaic module 500, converts a direct current voltage output by the photovoltaic module 500 into a first charge voltage, and outputs the first charge voltage to the battery control unit 220. The battery control unit 220 outputs the first charge voltage to the positive direct current transmission line Aus+ and the negative direct current transmission line Aus-. The BCU 220 converts the discharge voltage into the second power supply voltage and outputs the second power supply voltage to positive electrodes of the second diodes D2_1 to D2_3. The first battery pack 100_1 is used as an example. The second power supply voltage is supplied to the auxiliary power supply circuit 110_1 via the second diode D2_1, to activate the auxiliary power supply circuit 110_1, so that the auxiliary power supply circuit 110_1 supplies power to the direct current converter 130_1, the BMU 150_1, and the controller 160_1. The direct current converter 130_1 operates after being supplied power, converts first charge voltages on the positive direct current transmission line Aus+ and the negative direct current transmission line Aus- into the second charge voltage, and outputs the second charge voltage to the cell 120_1, to charge the cell 120_1. In addition, because the BMU 150_1 and the controller 160_1 are also powered on, the BMU 150_1 sends the collected port voltage VD_1 of the cell 120_1 to the controller 160_1. If the port voltage VD_1 is less than the first voltage threshold, the second switch K2_1 cannot be controlled to be turned on. Until the port voltage VD_1 is not less than the first voltage threshold, the controller 160_1 can control the second switch K2_1 to be turned on. Based on this, the first power supply voltage is input to the positive electrode of the first diode D1_1, and the second power supply voltage is input to the positive electrode of the second diode D2_1. The negative electrode of the first diode D1_1 and the negative electrode of the second diode D2_1 are connected together to form a counter-parallel arrangement. Therefore, when the first power supply voltage is greater than the second power supply voltage, power may be supplied to the auxiliary power supply circuit 110_1 through the path of the first diode D1_1. When the second power supply voltage is greater than the first power supply voltage, power may be supplied to the auxiliary power supply circuit 110_1 through a path of the second diode D2_1, so that the auxiliary power supply circuit 110_1 continues to supply power to the direct current converter 130_1, the BMU 150_1, and the controller 160_1, thereby implementing a process of continuing to charge the cell 120_1. Similarly, for an operating process of the battery packs 100_2 and 100_3, refer to the operating process of the battery pack 100_1. Details are not described herein again.

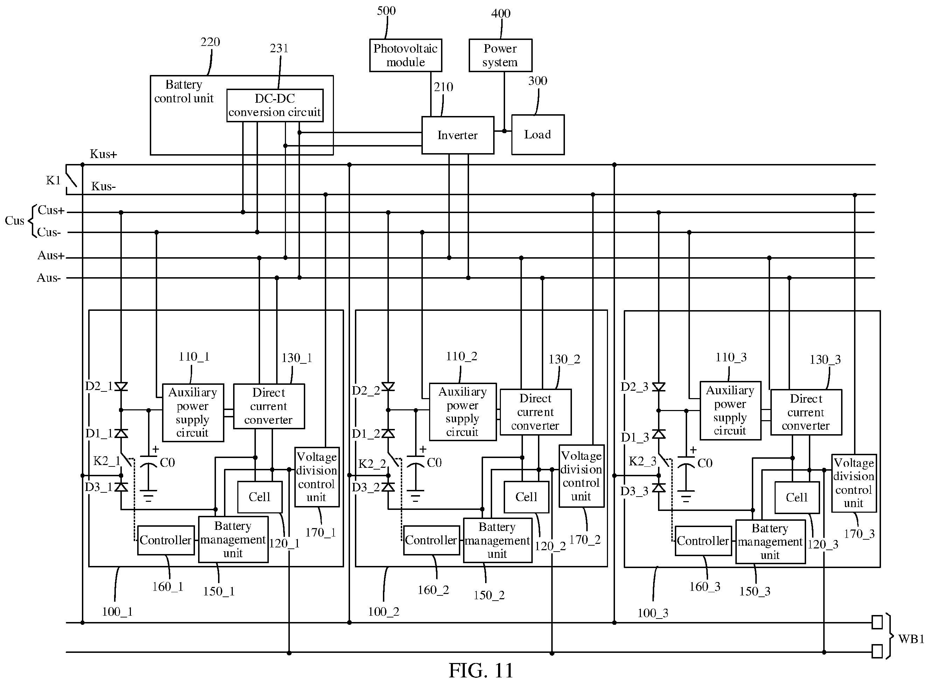

FIG. 11 is a diagram of a structure of an energy storage system according to another embodiment of this application. Refer to FIG. 11. A first interface WB1 may be further disposed in the energy storage system. The first interface WB1 is configured to connect to an external power supply, and the external power supply inputs a first direct current signal for the battery pack through the first interface WB1. For example, the positive electrode of the first diode D1_1 in the battery packs 100_1 to 100_3 is connected to a positive end of the first interface WB1 via the second switch K2_1, and second ports (for example, a total negative port) in the cells 120_1 to 120_3 are connected to a negative end of the first interface WB1. In addition, the external power supply may be a direct current power supply. In addition, for a manner of inputting the first direct current signal through the first interface WB1 and a manner of inputting the first direct current signal via the cell, the two manners may coexist in the energy storage system, or one of the two manners may exist. This is not limited herein. It may be understood that, for an operating process of the energy storage system in this embodiment, refer to the foregoing embodiments. Details are not described herein again.

During specific implementation, the first interface WB1 may be integrated into the BCU 220. Alternatively, the first interface WB1 may be integrated into each battery pack. Alternatively, a first interface WB1 is integrated into each battery pack, and a first interface WB1 is also integrated into the BCU 220, and the first interface WB1 of the battery pack is aggregated to the first interface WB1 in the BCU 220.

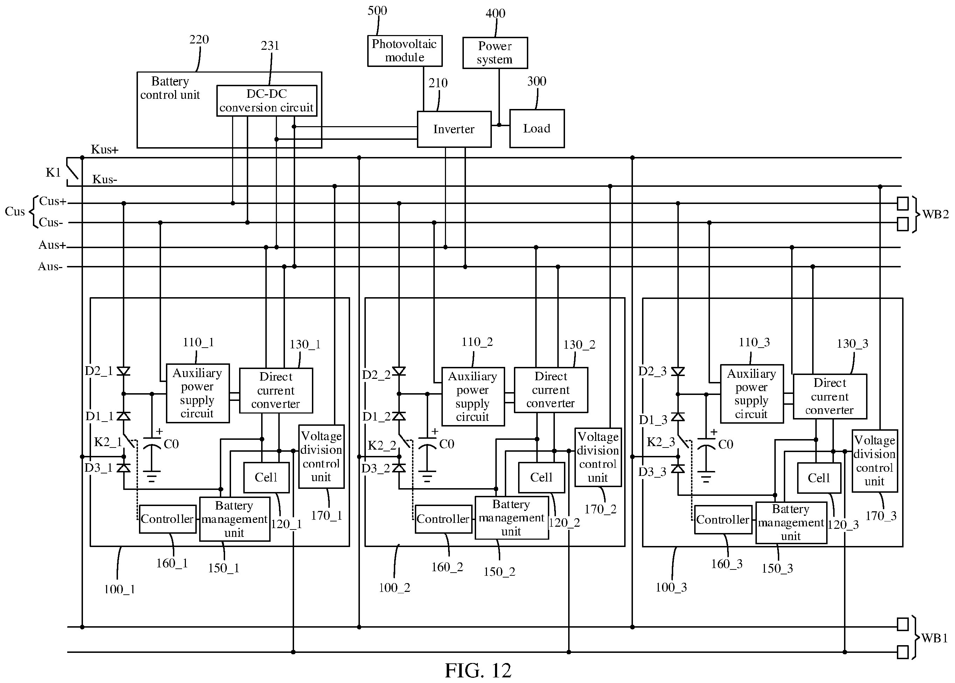

FIG. 12 is a diagram of a structure of an energy storage system according to another embodiment of this application. Refer to FIG. 12. A second interface WB2 may be further disposed in the energy storage system. The second interface WB2 is configured to connect to an external power supply, and the external power supply inputs a second direct current signal for the battery pack through the second interface WB2. For example, the positive power supply transmission line Cus+ is connected to a positive end of the second interface WB2, and the negative power supply transmission line Cus- is connected to a negative end of the second interface WB2. In addition, the external power supply may be a direct current power supply. In addition, for a manner of inputting the second direct current signal through the second interface WB2 and a manner of inputting the second direct current signal by using the cell through the direct current transmission lines, both manners may coexist in the energy storage system, or one of the manners may exist. This is not limited herein. It may be understood that, for an operating process of the energy storage system in this embodiment, refer to the foregoing embodiments. Details are not described herein again.

During specific implementation, the second interface WB2 may be integrated into the BCU 220. Alternatively, the second interface WB2 may be integrated into each battery pack. Alternatively, a second interface WB2 is integrated into each battery pack, and a second interface WB2 is also integrated into the BCU 220, and the second interface WB2 of the battery pack is aggregated to the second interface WB2 in the BCU 220.

It should be noted that the implementations described above do not cover all structures formed by arrangement and assembly of the energy storage system in this application, and other arrangement and assembly forms and variant forms thereof also fall within the protection scope of this application.

An embodiment of this application further provides a power supply method for an energy storage system. The method includes: in response to that a first power supply voltage of a first direct current signal is greater than a second power supply voltage of a second direct current signal, activating an auxiliary power supply circuit via a first unilateral conduction component to supply power to a direct current converter; or in response to that the second power supply voltage is greater than the first power supply voltage, activating the auxiliary power supply circuit via a second unilateral conduction component to supply power to the direct current converter. Based on this, after the power is supplied to the direct current converter, a battery voltage of a cell is converted into a discharge voltage and then the discharge voltage is output. In this way, an inverter converts the discharge voltage into a load voltage and then outputs the load voltage to a load, to supply power to the load.

An embodiment of this application further provides a charge method for an energy storage system. The method includes: An inverter converts an input voltage into a first charge voltage and then outputs the first charge voltage to a battery control unit; and the battery control unit converts the first charge voltage into a second power supply voltage and then outputs the second power supply voltage to power supply transmission lines, so that a second unilateral conduction component activates, based on the second power supply voltage, an auxiliary power supply circuit to supply power to a direct current converter. Based on this, the direct current converter converts the first charge voltage into a second charge voltage and then outputs the second charge voltage to a cell, to charge the cell.

The foregoing content is merely specific implementations of this application. The protection scope of this application shall be subject to the claims, and is not limited to the specific implementations listed in this application. Any variation or replacement readily figured out by a person skilled in the art within the technical scope defined in the claims shall fall within the protection scope of this application.

## Claims

1. A battery pack (100, 100_1-100_3), comprising an auxiliary power supply circuit (110, 110_1-110_3), a direct current converter (130, 130_1), a cell (110_1, 120, 120_1-120_3), a first unilateral conduction component (141), and a second unilateral conduction component (142), wherein
a conduction electrode of the first unilateral conduction component (141) is configured to receive a first direct current signal (Vin1) from the cell (110_1, 120, 120_1-120_3), a conduction electrode of the second unilateral conduction component (142) is configured to receive a second direct current signal (Vin2) from a power supply transmission line (Cus+), and a cut-off electrode of the first unilateral conduction component (141) and a cut-off electrode of the second unilateral conduction component (142) are connected to each other and then connected to the auxiliary power supply circuit (110, 110_1-110_3);
the auxiliary power supply circuit (110, 110_1-110_3) is connected to the direct current converter (130, 130_1), and the auxiliary power supply circuit (110, 110_1-110_3) is configured to: receive an activation voltage input by the first unilateral conduction component (141) or the second unilateral conduction component (142) and then operate, and convert the input voltage and then supply power to the direct current converter (130, 130_1); and
the direct current converter (130, 130_1) is further connected to the cell (110_1, 120, 120_1-120_3), and the direct current converter (130, 130_1) is configured to supply power based on the auxiliary power supply circuit (110, 110_1-110_3), convert a battery voltage of the cell (110_1, 120, 120_1-120_3) into a discharge voltage, and output the discharge voltage.

2. The battery pack (100, 100_1-100_3) according to claim 1, wherein the cell (110_1, 120, 120_1-120_3) is connected to the conduction electrode of the first unilateral conduction component (141).

3. The battery pack (100, 100_1-100_3) according to claim 2, wherein the battery pack (100, 100_1-100_3) further comprises a second switch, wherein
one end of the second switch is connected to the conduction electrode of the first unilateral conduction component (141), and the other end of the second switch is connected to the cell (110_1, 120, 120_1-120_3); or
one end of the second switch is connected to the cut-off electrode of the first unilateral conduction component (141), and the other end of the second switch and the cut-off electrode of the second unilateral conduction component (142) are connected to each other and then connected to the auxiliary power supply circuit (110, 110_1-110_3).

4. The battery pack (100, 100_1-100_3) according to claim 3, wherein the controller (160, 160_1) is further configured to:
in response to that the port voltage is not less than a first voltage threshold, control the second switch to be turned on.

5. The battery pack (100, 100_1-100_3) according to claim 3 or 4, wherein the battery pack (100, 100_1-100_3) further comprises a voltage division control unit (170, 170_1-170_3), the voltage division control unit (170, 170_1-170_3) is connected to a second port of the cell (110_1, 120, 120_1-120_3), and the voltage division control unit (170, 170_1-170_3) is configured to connect to a first port of the cell (110_1, 120, 120_1-120_3) via a first switch; and
the voltage division control unit (170, 170_1-170_3) is further connected to the second switch, and is configured to: in response to a current input, control the second switch to be turned on.

6. The battery pack (100, 100_1-100_3) according to claim 5, wherein the battery pack (100, 100_1-100_3) further comprises a third unilateral conduction component (143), a conduction electrode of the third unilateral conduction component (143) is connected to the first port of the cell (110_1, 120, 120_1-120_3), and a cut-off electrode of the third unilateral conduction component (143) is configured to connect to the voltage division control unit (170, 170_1-170_3) via the first switch.

7. The battery pack (100, 100_1-100_3) according to claim 6, wherein the cut-off electrode of the third unilateral conduction component (143) is further connected to the second switch; or
the cut-off electrode of the third unilateral conduction component (143) is further connected to the conduction electrode of the first unilateral conduction component (141).

8. The battery pack (100, 100_1-100_3) according to any one of claims 1 to 7, wherein the first unilateral conduction component (141) is configured to: in response to that a voltage of the first direct current signal is greater than a voltage of the second direct current signal, output the activation voltage to the auxiliary power supply circuit (110, 110_1-110_3).

9. The battery pack (100, 100_1-100_3) according to any one of claims 1 to 8, wherein the second unilateral conduction component (142) is configured to: in response to that the voltage of the second direct current signal is greater than the voltage of the first direct current signal, output the activation voltage to the auxiliary power supply circuit (110, 110_1-110_3).

10. The battery pack (100, 100_1-100_3) according to any one of claims 1 to 9, wherein the first unilateral conduction component (141) comprises a first diode, a positive electrode of the first diode is configured to receive the first direct current signal, and a negative electrode of the first diode is connected to the cut-off electrode of the second unilateral conduction component (142); or
the first unilateral conduction component (141) comprises a first N-type transistor, a gate and a drain of the first N-type transistor are connected to each other and then configured to receive the first direct current signal, and a source of the first N-type transistor is connected to the cut-off electrode of the second unilateral conduction component (142); or
the first unilateral conduction component (141) comprises a first P-type transistor, a gate and a drain of the first P-type transistor are connected to each other and then connected to the cut-off electrode of the second unilateral conduction component (142), and a source of the first P-type transistor is configured to receive the first direct current signal.

11. The battery pack (100, 100_1-100_3) according to any one of claims 1 to 10, wherein the second unilateral conduction component (142) comprises a second diode, a positive electrode of the second diode is configured to receive the second direct current signal, and a negative electrode of the second diode is connected to the cut-off electrode of the first unilateral conduction component (141); or
the second unilateral conduction component (142) comprises a second N-type transistor, a gate and a drain of the second N-type transistor are connected to each other and then configured to receive the second direct current signal, and a source of the second N-type transistor is connected to the cut-off electrode of the first unilateral conduction component (141); or
the second unilateral conduction component (142) comprises a second P-type transistor, a gate and a drain of the second P-type transistor are connected to the cut-off electrode of the first unilateral conduction component (141), and a source of the second P-type transistor is configured to receive the second direct current signal.

12. An energy storage system, comprising at least one battery pack (100, 100_1-100_3) according to any one of claims 1 to 11 and a battery control unit (220), wherein the battery control unit (220) is connected to the at least one battery pack (100, 100_1-100_3), and the battery control unit (220) is configured to output a discharge voltage output by a direct current converter (130, 130_1) in the battery pack (100, 100_1-100_3).

13. The energy storage system according to claim 12, wherein the energy storage system further comprises a first switch;
the battery pack (100, 100_1-100_3) comprises a third unilateral conduction component (143), a second switch, and a voltage division control unit (170, 170_1-170_3);
one end of the second switch is connected to a conduction electrode of the first unilateral conduction component (141), and the other end of the second switch is connected to the cell (110_1, 120, 120_1-120_3); or one end of the second switch is connected to a cut-off electrode of the first unilateral conduction component (141), and the other end of the second switch and a cut-off electrode of the second unilateral conduction component (142) are connected to each other and then connected to the auxiliary power supply circuit (110, 110_1-110_3);
the voltage division control unit (170, 170_1-170_3) is connected to a second port of the cell (110_1, 120, 120_1-120_3), a conduction electrode of the third unilateral conduction component (143) is connected to a first port of the cell (110_1, 120, 120_1-120_3), and a cut-off electrode of the third unilateral conduction component (143) is configured to connect to the voltage division control unit (170, 170_1-170_3) via the first switch; and
the voltage division control unit (170, 170_1-170_3) is connected to the second switch, and is configured to: in response to a current input, control the second switch to be turned on.

14. The energy storage system according to claim 13, wherein the energy storage system further comprises a first switch connection line and a second switch connection line, a first end of the first switch is connected to the first switch connection line, and a second end of the first switch is connected to the second switch connection line; and
cut-off electrodes of third unilateral conduction components (143) in at least two battery packs (100, 100_1-100_3) are connected to the first switch connection line, and voltage division control units (170, 170_1-170_3) in the at least two battery packs (100, 100_1-100_3) are connected to the second switch connection line.

15. The energy storage system according to any one of claims 12 to 14, wherein the energy storage system further comprises the battery control unit (220) and power supply transmission lines, wherein
the battery control unit (220) is connected to a direct current bus and the power supply transmission lines, and the battery control unit (220) is configured to convert a discharge voltage of the direct current bus into a second power supply voltage and output the second power supply voltage to the power supply transmission lines; and
the power supply transmission lines are configured to input a second direct current signal for the battery pack (100, 100_1-100_3), and a conduction electrode of the second unilateral conduction component (142) is connected to a positive power supply transmission line in the power supply transmission lines.

## Patentansprüche

1. Batteriepack (100, 100_1-100_3), umfassend eine Hilfsstromversorgungsschaltung (110, 110_1-110_3), einen Gleichstromwandler (130, 130_1), eine Zelle (110_1, 120, 120_1-120_3), ein erstes Bauteil mit Gleichrichterwirkung (141) und ein zweites Bauteil mit Gleichrichterwirkung (142), wobei eine Leitungselektrode des ersten Bauteils mit Gleichrichterwirkung (141) zum Empfangen eines ersten Gleichstromsignals (Vin1) von der Zelle (110_1, 120, 120_1-120_3) konfiguriert ist, eine Leitungselektrode des zweiten Bauteils mit Gleichrichterwirkung (142) zum Empfangen eines zweiten Gleichstromsignals (Vin2) von einer Stromversorgungsübertragungsleitung (Cus+) konfiguriert ist und eine Sperrelektrode des ersten Bauteils mit Gleichrichterwirkung (141) und eine Sperrelektrode des zweiten Bauteils mit Gleichrichterwirkung (142) miteinander verbunden und dann mit der Hilfsstromversorgungsschaltung (110, 110_1-110_3) verbunden sind;
die Hilfsstromversorgungsschaltung (110, 110_1-110_3) mit dem Gleichstromwandler (130, 130_1) verbunden ist und die Hilfsstromversorgungsschaltung (110, 110_1-110_3) zu Folgendem konfiguriert ist: Empfangen einer durch das erste Bauteil mit Gleichrichterwirkung (141) oder das zweite Bauteil mit Gleichrichterwirkung (142) eingegebenen Aktivierungsspannung und dann Arbeiten mit und Umwandeln der eingegebenen Spannung und dann Versorgen des Gleichstromwandlers (130, 130_1) mit Strom; und
der Gleichstromwandler (130, 130_1) ferner mit der Zelle (110_1, 120, 120_1-120_3) verbunden ist und der Gleichstromwandler (130, 130_1) zum Versorgen mit Strom basierend auf der Hilfsstromversorgungsschaltung (110, 110_1-110_3), Umwandeln einer Batteriespannung der Zelle (110_1, 120, 120_1-120_3) in eine Entladespannung und Ausgeben der Entladespannung konfiguriert ist.

2. Batteriepack (100, 100_1-100_3) nach Anspruch 1, wobei die Zelle (110_1, 120, 120_1-120_3) mit der Leitungselektrode des ersten Bauteils mit Gleichrichterwirkung (141) verbunden ist.

3. Batteriepack (100, 100_1-100_3) nach Anspruch 2, wobei der Batteriepack (100, 100_1-100_3) ferner einen zweiten Schalter umfasst, wobei
ein Ende des zweiten Schalters mit der Leitungselektrode des ersten Bauteils mit Gleichrichterwirkung (141) verbunden ist und das andere Ende des zweiten Schalters mit der Zelle (110_1, 120, 120_1-120_3) verbunden ist; oder
ein Ende des zweiten Schalters mit der Sperrelektrode des ersten Bauteils mit Gleichrichterwirkung (141) verbunden ist und das andere Ende des zweiten Schalters und die Sperrelektrode des zweiten Bauteils mit Gleichrichterwirkung (142) miteinander verbunden und dann mit der Hilfsstromversorgungsschaltung (110, 110_1-110_3) verbunden sind.

4. Batteriepack (100, 100_1-100_3) nach Anspruch 3, wobei die Steuerung (160, 160_1) ferner zu Folgendem konfiguriert ist: Steuern des zweiten Schalters zum Einschalten als Reaktion darauf, dass die Anschlussspannung nicht unter einem ersten Spannungsschwellenwert liegt.

5. Batteriepack (100, 100_1-100_3) nach Anspruch 3 oder 4, wobei der Batteriepack (100, 100_1-100_3) ferner eine Spannungsteilungssteuereinheit (170, 170_1-170_3) umfasst, die Spannungsteilungssteuereinheit (170, 170_1-170_3) mit einem zweiten Anschluss der Zelle (110_1, 120, 120_1-120_3) verbunden ist und die Spannungsteilungssteuereinheit (170, 170_1-170_3) zum Verbinden mit einem ersten Anschluss der Zelle (110_1, 120, 120_1-120_3) über einen ersten Schalter konfiguriert ist; und die Spannungsteilungssteuereinheit (170, 170_1-170_3) ferner mit dem zweiten Schalter verbunden ist und zu Folgendem konfiguriert ist: Steuern des zweiten Schalters zum Einschalten als Reaktion auf eine Stromeingabe.

6. Batteriepack (100, 100_1-100_3) nach Anspruch 5, wobei der Batteriepack (100, 100_1-100_3) ferner ein drittes Bauteil mit Gleichrichterwirkung (143) umfasst, eine Leitungselektrode des dritten Bauteils mit Gleichrichterwirkung (143) mit dem ersten Anschluss der Zelle (110_1, 120, 120_1-120_3) verbunden ist und eine Sperrelektrode des dritten Bauteils mit Gleichrichterwirkung (143) zum Verbinden mit der Spannungsteilungssteuereinheit (170, 170_1-170_3) über den ersten Schalter konfiguriert ist.

7. Batteriepack (100, 100_1-100_3) nach Anspruch 6, wobei die Sperrelektrode des dritten Bauteils mit Gleichrichterwirkung (143) ferner mit dem zweiten Schalter verbunden ist; oder
die Sperrelektrode des dritten Bauteils mit Gleichrichterwirkung (143) ferner mit der Leitungselektrode des ersten Bauteils mit Gleichrichterwirkung (141) verbunden ist.

8. Batteriepack (100, 100_1-100_3) nach einem der Ansprüche 1 bis 7, wobei das erste Bauteil mit Gleichrichterwirkung (141) zu Folgendem konfiguriert ist: Ausgeben der Aktivierungsspannung an die Hilfsstromversorgungsschaltung (110, 110_1-110_3) als Reaktion darauf, dass eine Spannung des ersten Gleichstromsignals größer ist als eine Spannung des zweiten Gleichstromsignals.

9. Batteriepack (100, 100_1-100_3) nach einem der Ansprüche 1 bis 8, wobei das zweite Bauteil mit Gleichrichterwirkung (142) zu Folgendem konfiguriert ist: Ausgeben der Aktivierungsspannung an die Hilfsstromversorgungsschaltung (110, 110_1-110_3) als Reaktion darauf, dass die Spannung des zweiten Gleichstromsignals größer ist als die Spannung des ersten Gleichstromsignals.

10. Batteriepack (100, 100_1-100_3) nach einem der Ansprüche 1 bis 9, wobei das erste Bauteil mit Gleichrichterwirkung (141) eine erste Diode umfasst, eine positive Elektrode der ersten Diode zum Empfangen des ersten Gleichstromsignals konfiguriert ist und eine negative Elektrode der ersten Diode mit der Sperrelektrode des zweiten Bauteils mit Gleichrichterwirkung (142) verbunden ist; oder
das erste Bauteil mit Gleichrichterwirkung (141) einen ersten N-Typ-Transistor umfasst, ein Gate und ein Drain des ersten N-Typ-Transistors miteinander verbunden und dann zum Empfangen des ersten Gleichstromsignals konfiguriert sind und eine Source des ersten N-Typ-Transistors mit der Sperrelektrode des zweiten Bauteils mit Gleichrichterwirkung (142) verbunden ist; oder
das erste Bauteil mit Gleichrichterwirkung (141) einen ersten P-Typ-Transistor umfasst, ein Gate und ein Drain des ersten P-Typ-Transistors miteinander verbunden und dann mit der Sperrelektrode des zweiten Bauteils mit Gleichrichterwirkung (142) verbunden sind und eine Source des ersten P-Typ-Transistors zum Empfangen des ersten Gleichstromsignals konfiguriert ist.

11. Batteriepack (100, 100_1-100_3) nach einem der Ansprüche 1 bis 10, wobei das zweite Bauteil mit Gleichrichterwirkung (142) eine zweite Diode umfasst, eine positive Elektrode der zweiten Diode zum Empfangen des zweiten Gleichstromsignals konfiguriert ist und eine negative Elektrode der zweiten Diode mit der Sperrelektrode des ersten Bauteils mit Gleichrichterwirkung (141) verbunden ist; oder
das zweite Bauteil mit Gleichrichterwirkung (142) einen zweiten N-Typ-Transistor umfasst, ein Gate und ein Drain des zweiten N-Typ-Transistors miteinander verbunden und dann zum Empfangen des zweiten Gleichstromsignals konfiguriert sind und eine Source des zweiten N-Typ-Transistors mit der Sperrelektrode des ersten Bauteils mit Gleichrichterwirkung (141) verbunden ist; oder das zweite Bauteil mit Gleichrichterwirkung (142) einen zweiten P-Typ-Transistor umfasst, ein Gate und ein Drain des zweiten P-Typ-Transistors mit der Sperrelektrode des ersten Bauteils mit Gleichrichterwirkung (141) verbunden sind und eine Source des zweiten P-Typ-Transistors zum Empfangen des zweiten Gleichstromsignals konfiguriert ist.

12. Energiespeichersystem, umfassend mindestens einen Batteriepack (100, 100_1-100_3) nach einem der Ansprüche 1 bis 11 und eine Batteriesteuereinheit (220), wobei die Batteriesteuereinheit (220) mit dem mindestens einen Batteriepack (100, 100_1-100_3) verbunden ist und die Batteriesteuereinheit (220) zum Ausgeben einer durch einen Gleichstromwandler (130, 130_1) in dem Batteriepack (100, 100_1-100_3) ausgegebene Entladespannung konfiguriert ist.

13. Energiespeichersystem nach Anspruch 12, wobei das Energiespeichersystem ferner einen ersten Schalter umfasst; der Batteriepack (100, 100_1-100_3) ein drittes Bauteil mit Gleichrichterwirkung (143), einen zweiten Schalter und eine Spannungsteilungssteuereinheit (170, 170_1-170_3) umfasst;
ein Ende des zweiten Schalters mit einer Leitungselektrode des ersten Bauteils mit Gleichrichterwirkung (141) verbunden ist und das andere Ende des zweiten Schalters mit der Zelle (110_1, 120, 120_1-120_3) verbunden ist; oder ein Ende des zweiten Schalters mit einer Sperrelektrode des ersten Bauteils mit Gleichrichterwirkung (141) verbunden ist und das andere Ende des zweiten Schalters und eine Sperrelektrode des zweiten Bauteils mit Gleichrichterwirkung (142) miteinander verbunden und dann mit der Hilfsstromversorgungsschaltung (110, 110_1-110_3) verbunden sind;
die Spannungsteilungssteuereinheit (170, 170_1-170_3) mit einem zweiten Anschluss der Zelle (110_1, 120, 120_1-120_3) verbunden ist, eine Leitungselektrode des dritten Bauteils mit Gleichrichterwirkung (143) mit einem ersten Anschluss der Zelle (110_1, 120, 120_1-120_3) verbunden ist und eine Sperrelektrode des dritten Bauteils mit Gleichrichterwirkung (143) zum Verbinden mit der Spannungsteilungssteuereinheit (170, 170_1-170_3) über den ersten Schalter konfiguriert ist; und
die Spannungsteilungssteuereinheit (170, 170_1-170_3) mit dem zweiten Schalter verbunden ist und zu Folgendem konfiguriert ist: Steuern des zweiten Schalters zum Einschalten als Reaktion auf eine Stromeingabe.

14. Energiespeichersystem nach Anspruch 13, wobei das Energiespeichersystem ferner eine erste Schalterverbindungsleitung und eine zweite Schalterverbindungsleitung umfasst, wobei ein erstes Ende des ersten Schalters mit der ersten Schalterverbindungsleitung verbunden ist und ein zweites Ende des ersten Schalters mit der zweiten Schalterverbindungsleitung verbunden ist; und Sperrelektroden dritter Bauteile mit Gleichrichterwirkung (143) in mindestens zwei Batteriepacks (100, 100_1-100_3) mit der ersten Schalterverbindungsleitung verbunden sind und Spannungsteilungssteuereinheiten (170, 170_1-170_3) in den mindestens zwei Batteriepack (100, 100_1-100_3) mit der zweiten Schalterverbindungsleitung verbunden sind.

15. Energiespeichersystem nach einem der Ansprüche 12 bis 14, wobei das Energiespeichersystem ferner die Batteriesteuereinheit (220) und Stromversorgungsübertragungsleitungen umfasst, wobei die Batteriesteuereinheit (220) mit einem Gleichstrombus und den Stromversorgungsübertragungsleitungen verbunden ist und die Batteriesteuereinheit (220) zum Umwandeln einer Entladespannung des Gleichstrombusses in eine zweite Stromversorgungsspannung konfiguriert ist und die zweite Stromversorgungsspannung an die Stromversorgungsübertragungsleitungen ausgibt; und
die Stromversorgungsübertragungsleitungen zum Eingeben eines zweiten Gleichstromsignals für den Batteriepack (100, 100_1-100_3) konfiguriert sind und eine Leitungselektrode des zweiten Bauteils mit Gleichrichterwirkung (142) mit einer positiven Stromversorgungsübertragungsleitung in den Stromversorgungsübertragungsleitungen verbunden ist.

## Revendications

1. Bloc-batterie (100, 100_1-100_3), comprenant un circuit d'alimentation électrique auxiliaire (110, 110_1-110_3), un convertisseur de courant continu (130, 130_1), une cellule (110_1, 120, 120_1-120_3), un premier composant de conduction unilatérale (141) et un deuxième composant de conduction unilatérale (142), dans lequel
une électrode de conduction du premier composant de conduction unilatérale (141) est configurée pour recevoir un premier signal de courant continu (Vin1) provenant de la cellule (110_1, 120, 120_1-120_3), une électrode de conduction du deuxième composant de conduction unilatérale (142) est configurée pour recevoir un second signal de courant continu (Vin2) provenant d'une ligne de transmission d'alimentation électrique (Cus+), et une électrode de coupure du premier composant de conduction unilatérale (141) et une électrode de coupure du deuxième composant de conduction unilatérale (142) sont connectées l'une à l'autre puis connectées au circuit d'alimentation électrique auxiliaire (110, 110_1-110_3) ;
le circuit d'alimentation électrique auxiliaire (110, 110_1-110_3) est connecté au convertisseur de courant continu (130, 130_1), et le circuit d'alimentation électrique auxiliaire (110, 110_1-110_3) est configuré pour : recevoir une tension d'activation entrée par le premier composant de conduction unilatérale (141) ou le deuxième composant de conduction unilatérale (142) puis fonctionner, et convertir la tension d'entrée puis alimenter en électricité le convertisseur de courant continu (130, 130_1) ; et
le convertisseur de courant continu (130, 130_1) est également connecté à la cellule (110_1, 120, 120_1-120_3), et le convertisseur de courant continu (130, 130_1) est configuré pour alimenter en électricité sur la base du circuit d'alimentation électrique auxiliaire (110, 110_1-110_3), convertir une tension de batterie de la cellule (110_1, 120, 120_1-120_3) en une tension de décharge, et délivrer la tension de décharge.

2. Bloc-batterie (100, 100_1-100_3) selon la revendication 1, dans lequel la cellule (110_1, 120, 120_1-120_3) est connectée à l'électrode de conduction du premier composant de conduction unilatérale (141).

3. Bloc-batterie (100, 100_1-100_3) selon la revendication 2, dans lequel le bloc-batterie (100, 100_1-100_3) comprend également un second commutateur, dans lequel
une extrémité du second commutateur est connectée à l'électrode de conduction du premier composant de conduction unilatérale (141), et l'autre extrémité du second commutateur est connectée à la cellule (110_1, 120, 120_1-120_3) ; ou
une extrémité du second commutateur est connectée à l'électrode de coupure du premier composant de conduction unilatérale (141), et l'autre extrémité du second commutateur et l'électrode de coupure du deuxième composant de conduction unilatérale (142) sont connectées l'une à l'autre puis connectées au circuit d'alimentation électrique auxiliaire (110, 110_1-110_3).

4. Bloc-batterie (100, 100_1-100_3) selon la revendication 3, dans lequel le dispositif de commande (160, 160_1) est également configuré pour :
en réponse au fait que la tension du port n'est pas inférieure à un premier seuil de tension, commander le second commutateur pour qu'il soit activé.

5. Bloc-batterie (100, 100_1-100_3) selon la revendication 3 ou 4, dans lequel le bloc-batterie (100, 100_1-100_3) comprend également une unité de commande de division de tension (170, 170_1-170_3), l'unité de commande de division de tension (170, 170_1-170_3) est connectée à un second port de la cellule (110_1, 120, 120_1-120_3), et l'unité de commande de division de tension (170, 170_1-170_3) est configurée pour se connecter à un premier port de la cellule (110_1, 120, 120_1-120_3) via un premier commutateur ; et
l'unité de commande de division de tension (170, 170_1-170_3) est également connectée au second commutateur, et est configurée pour : en réponse à une entrée de courant, commander le second commutateur pour qu'il soit activé.

6. Bloc-batterie (100, 100_1-100_3) selon la revendication 5, dans lequel le bloc-batterie (100, 100_1-100_3) comprend également un troisième composant de conduction unilatérale (143), une électrode de conduction du troisième composant de conduction unilatérale (143) est connectée au premier port de la cellule (110_1, 120, 120_1-120_3), et une électrode de coupure du troisième composant de conduction unilatérale (143) est configurée pour se connecter à l'unité de commande de division de tension (170, 170_1-170_3) via le premier commutateur.

7. Bloc-batterie (100, 100_1-100_3) selon la revendication 6, dans lequel l'électrode de coupure du troisième composant de conduction unilatérale (143) est également connectée au second commutateur ; ou
l'électrode de coupure du troisième composant de conduction unilatérale (143) est également connectée à l'électrode de conduction du premier composant de conduction unilatérale (141).

8. Bloc-batterie (100, 100_1-100_3) selon l'une quelconque des revendications 1 à 7, dans lequel le premier composant de conduction unilatérale (141) est configuré pour : en réponse au fait qu'une tension du premier signal de courant continu est supérieure à une tension du second signal de courant continu, délivrer la tension d'activation au circuit d'alimentation électrique auxiliaire (110, 110_1-110_3).

9. Bloc-batterie (100, 100_1-100_3) selon l'une quelconque des revendications 1 à 8, dans lequel le deuxième composant de conduction unilatérale (142) est configuré pour : en réponse au fait que la tension du second signal de courant continu est supérieure à la tension du premier signal de courant continu, délivrer la tension d'activation au circuit d'alimentation électrique auxiliaire (110, 110_1-110_3).

10. Bloc-batterie (100, 100_1-100_3) selon l'une quelconque des revendications 1 à 9, dans lequel le premier composant de conduction unilatérale (141) comprend une première diode, une électrode positive de la première diode est configurée pour recevoir le premier signal de courant continu, et une électrode négative de la première diode est connectée à l'électrode de coupure du deuxième composant de conduction unilatérale (142) ; ou
le premier composant de conduction unilatérale (141) comprend un premier transistor de type N, une grille et un drain du premier transistor de type N sont connectés l'un à l'autre puis configurés pour recevoir le premier signal de courant continu, et une source du premier transistor de type N est connectée à l'électrode de coupure du deuxième composant de conduction unilatérale (142) ; ou
le premier composant de conduction unilatérale (141) comprend un premier transistor de type P, une grille et un drain du premier transistor de type P sont connectés l'un à l'autre puis connectés à l'électrode de coupure du deuxième composant de conduction unilatérale (142), et une source du premier transistor de type P est configurée pour recevoir le premier signal de courant continu.

11. Bloc-batterie (100, 100_1-100_3) selon l'une quelconque des revendications 1 à 10, dans lequel le deuxième composant de conduction unilatérale (142) comprend une seconde diode, une électrode positive de la seconde diode est configurée pour recevoir le second signal de courant continu, et une électrode négative de la seconde diode est connectée à l'électrode de coupure du premier composant de conduction unilatérale (141) ; ou
le deuxième composant de conduction unilatérale (142) comprend un second transistor de type N, une grille et un drain du second transistor de type N sont connectés l'un à l'autre puis configurés pour recevoir le second signal de courant continu, et une source du second transistor de type N est connectée à l'électrode de coupure du premier composant de conduction unilatérale (141) ; ou
le deuxième composant de conduction unilatérale (142) comprend un second transistor de type P, une grille et un drain du second transistor de type P sont connectés à l'électrode de coupure du premier composant de conduction unilatérale (141), et une source du second transistor de type P est configurée pour recevoir le second signal de courant continu.

12. Système de stockage d'énergie, comprenant au moins un bloc-batterie (100, 100_1-100_3) selon l'une quelconque des revendications 1 à 11 et une unité de commande de batterie (220), dans lequel l'unité de commande de batterie (220) est connectée à l'au moins un bloc-batterie (100, 100_1-100_3), et l'unité de commande de batterie (220) est configurée pour délivrer une tension de décharge délivrée par un convertisseur de courant continu (130, 130_1) dans le bloc-batterie (100, 100_1-100_3).

13. Système de stockage d'énergie selon la revendication 12, dans lequel le système de stockage d'énergie comprend également un premier commutateur ;
le bloc-batterie (100, 100_1-100_3) comprend un troisième composant de conduction unilatérale (143), un second commutateur et une unité de commande de division de tension (170, 170_1-170_3) ;
une extrémité du second commutateur est connectée à une électrode de conduction du premier composant de conduction unilatérale (141), et l'autre extrémité du second commutateur est connectée à la cellule (110_1, 120, 120_1-120_3) ; ou une extrémité du second commutateur est connectée à une électrode de coupure du premier composant de conduction unilatérale (141), et l'autre extrémité du second commutateur et une électrode de coupure du deuxième composant de conduction unilatérale (142) sont connectées l'une à l'autre puis connectées au circuit d'alimentation électrique auxiliaire (110, 110_1-110_3) ; l'unité de commande de division de tension (170, 170_1-170_3) est connectée à un second port de la cellule (110_1, 120, 120_1-120_3), une électrode de conduction du troisième composant de conduction unilatérale (143) est connectée à un premier port de la cellule (110_1, 120, 120_1-120_3), et une électrode de coupure du troisième composant de conduction unilatérale (143) est configurée pour se connecter à l'unité de commande de division de tension (170, 170_1-170_3) via le premier commutateur ; et
l'unité de commande de division de tension (170, 170_1-170_3) est connectée au second commutateur, et est configurée pour : en réponse à une entrée de courant, commander le second commutateur pour qu'il soit activé.

14. Système de stockage d'énergie selon la revendication 13, dans lequel le système de stockage d'énergie comprend également une première ligne de connexion de commutateur et une seconde ligne de connexion de commutateur, une première extrémité du premier commutateur est connectée à la première ligne de connexion de commutateur, et une seconde extrémité du premier commutateur est connectée à la seconde ligne de connexion de commutateur ; et
des électrodes de coupure de troisièmes composants de conduction unilatérale (143) dans au moins deux blocs-batteries (100, 100_1-100_3) sont connectées à la première ligne de connexion de commutation, et des unités de commande de division de tension (170, 170_1-170_3) dans les au moins deux blocs-batteries (100, 100_1-100_3) sont connectées à la seconde ligne de connexion de commutation.

15. Système de stockage d'énergie selon l'une quelconque des revendications 12 à 14, dans lequel le système de stockage d'énergie comprend également l'unité de commande de batterie (220) et les lignes de transmission d'alimentation électrique, dans lequel
l'unité de commande de batterie (220) est connectée à un bus de courant continu et aux lignes de transmission d'alimentation électrique, et l'unité de commande de batterie (220) est configurée pour convertir une tension de décharge du bus de courant continu en une seconde tension d'alimentation électrique et délivrer la seconde tension d'alimentation électrique aux lignes de transmission d'alimentation électrique ; et
les lignes de transmission d'alimentation électrique sont configurées pour entrer un second signal de courant continu pour le bloc-batterie (100, 100_1-100_3), et une électrode de conduction du deuxième composant de conduction unilatérale (142) est connectée à une ligne de transmission d'alimentation électrique positive dans les lignes de transmission d'alimentation électrique.
